# EUROPEAN PATENT APPLICATION

(11) **EP 4 651 599 A1**
(43) Date of publication of application: **19.11.2025**
(21) Application number: 23915277.0
(22) Date of filing: 09.01.2023
(51) Int. Cl.: H04W 72/1268, H04L 12/14, H04W 28/02

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Gunzelmann, Rainer
(86) International application number: PCT/CN2023/071465
(87) International publication number: WO 2024/148498

(57) **Abstract**

Embodiments of the present disclosure relate to an information transmission method and apparatus, a communication device, and a storage medium. A policy control function (PCF) determines and sends an association identifier of a predetermined service, the association identifier being used for associating a transmission delay parameter for uplink transmission and a transmission delay parameter for downlink transmission of a predetermined service data stream.

## Description

### TECHNICAL FIELD

The present disclosure relates to, but is not limited to, the field of wireless communication technology, and specifically to an information transmission method and apparatus, a communication device and a storage medium.

### BACKGROUND

Mobile media services, cloud augmented reality (AR)/virtual reality (VR) and other extended reality (XR) services, cloud games, video-based machine or drone remote control and other services are expected to contribute more and more traffic to 5G wireless communication networks. XR services involve multimodal data flows. Multimodal data is data that describes the same service/application and is input from the same device or different devices (including sensors), which may be output to one or more destination device terminals. The data flows in the multimodal data are often correlated, sometimes strongly, such as synchronization of audio and video streams, synchronization of touch and vision, etc.

### SUMMARY

Accordingly, embodiments of the present disclosure provide an information transmission method and apparatus, a communication device and a storage medium.

According to a first aspect of the embodiments of the present disclosure, an information transmission method is provided and performed by a policy control function (PCF), including:
determining and sending a correlation identifier (ID) of a predetermined service, in which the correlation ID is used to correlate a transmission latency parameter of an uplink transmission of a data flow of the predetermined service with a transmission latency parameter of a downlink transmission of the data flow of the predetermined service.

In an embodiment, the correlation ID is sent by the PCF to a session management function (SMF), and is sent by the SMF to at least one of:
an access network device; or
a user plane function (UPF).

In an embodiment, the correlation ID is indicated by a policy and charging control (PCC) rule associated with the predetermined service.

In an embodiment, the method further includes:
receiving a quality of service (QoS) latency monitoring report of the uplink transmission and a QoS latency monitoring report of the downlink transmission, in which the QoS latency monitoring report of the uplink transmission and the QoS latency monitoring report of the downlink transmission are correlated using the correlation ID; and
updating a PCC rule of the uplink transmission of the predetermined service and/or a PCC rule of the downlink transmission of the predetermined service based on the QoS latency monitoring report of the uplink transmission and the QoS latency monitoring report of the downlink transmission.

In an embodiment, updating the PCC rule of the uplink transmission of the predetermined service and/or the PCC rule of the downlink transmission of the predetermined service based on the QoS latency monitoring report of the uplink transmission and the QoS latency monitoring report of the downlink transmission includes:
sending the QoS latency monitoring report of the uplink transmission and the QoS latency monitoring report of the downlink transmission to an application function (AF) associated with the predetermined service;
receiving AF session update information sent by the AF in response to the QoS latency monitoring report of the uplink transmission and the QoS latency monitoring report of the downlink transmission; and
updating the PCC rule of the uplink transmission of the predetermined service and/or the PCC rule of the downlink transmission of the predetermined service based on the AF session update information.

In an embodiment, receiving the QoS latency monitoring report of the uplink transmission and the QoS latency monitoring report of the downlink transmission includes at least one of:
receiving the QoS latency monitoring report of the uplink transmission and the QoS latency monitoring report of the downlink transmission sent by a user plane function (UPF); or
receiving the QoS latency monitoring report of the uplink transmission and the QoS latency monitoring report of the downlink transmission sent by an access network device via a UPF.

In an embodiment, the method further includes:
receiving AF session update information sent by an AF associated with the predetermined service in response to the QoS latency monitoring report of the uplink transmission and the QoS latency monitoring report of the downlink transmission, in which the QoS latency monitoring report of the uplink transmission and the QoS latency monitoring report of the downlink transmission are sent by a UPF to the AF;
updating the PCC rule of the uplink transmission of the predetermined service and/or the PCC rule of the downlink transmission of the predetermined service based on the AF session update information.

In an embodiment, the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets an uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a downlink subscribe event triggering condition, and determining the QoS latency monitoring report of the uplink transmission through the correlation ID.

In an embodiment, updating the PCC rule of the uplink transmission of the predetermined service includes: updating a data packet delay budget (PDB) parameter and/or a data packet set delay budget (PSDB) parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In an embodiment, the method further includes: determining the transmission latency parameter of the uplink transmission of the data flow and/or the transmission latency parameter of the downlink transmission of the data flow based on a transmission latency parameter of a bidirectional transmission of the data flow of the predetermined service.

In an embodiment, the predetermined service further includes at least one of:
an extended reality multimedia (XRM) service; or
a multimodal service.

According to a second aspect of the embodiments of the present disclosure, an information transmission method is provided and performed by an AF, including:
sending a transmission latency parameter of a bidirectional transmission of a predetermined service to a policy control function (PCF), in which the transmission latency parameter of the bidirectional transmission is used for the PCF to determine a correlation identifier (ID) of the predetermined service, and the correlation ID is used to correlate a transmission latency parameter of an uplink transmission with a transmission latency parameter of a downlink transmission of a data flow of the predetermined service.

In an embodiment, the correlation ID is sent by the PCF via an SMF to at least one of: an access network device or a UPF.

In an embodiment, the correlation ID is carried in a PCC rule associated with the predetermined service sent by the PCF to the SMF.

In an embodiment, the method further includes:
receiving a QoS latency monitoring report of the uplink transmission and a QoS latency monitoring report of the downlink transmission sent by a UPF or the PCF.

In an embodiment, the method further includes:
determining whether to send AF session update information to the PCF based at least on the QoS latency monitoring report of the uplink transmission and the QoS latency monitoring report of the downlink transmission.

In an embodiment, the AF session update information is used for the PCF to update a PCC rule of the uplink transmission of the predetermined service and/or a PCC rule of the downlink transmission of the predetermined service.

In an embodiment, the AF session update information is used for the PCF to update a PDB parameter and/or a PSDB parameter in the PCC rule of the uplink transmission of the predetermined service and/or a PDB parameter and/or a PSDB parameter in the PCC rule of the downlink transmission of the predetermined service.

In an embodiment, receiving the QoS latency monitoring report of the uplink transmission and the QoS latency monitoring report of the downlink transmission sent by the UPF includes: receiving the QoS latency monitoring report of the uplink transmission and the QoS latency monitoring report of the downlink transmission sent by the UPF via an NEF;
receiving the QoS latency monitoring report of the uplink transmission and the QoS latency monitoring report of the downlink transmission sent by the PCF includes: receiving the QoS latency monitoring report of the uplink transmission and the QoS latency monitoring report of the downlink transmission sent by the PCF via the NEF.

In an embodiment, the transmission latency parameter of the bidirectional transmission is used for the PCF to determine the transmission latency parameter of the uplink transmission and the transmission latency parameter of the downlink transmission of the data flow of the predetermined service.

In an embodiment, sending the transmission latency parameter of the bidirectional transmission of the predetermined service to the PCF includes at least one of:
sending the transmission latency parameter of the bidirectional transmission of the predetermined service to the PCF via an NEF;
sending the transmission latency parameter of the bidirectional transmission of the predetermined service to the PCF via a time sensitive communication and time synchronization function (TSCTSF); or
sending the transmission latency parameter of the bidirectional transmission of the predetermined service to the PCF via an NEF and a TSCTSF.

According to a third aspect of the embodiments of the present disclosure, an information transmission method is provided and performed by a UPF, including:
receiving a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is indicated by a PCC rule associated with the predetermined service sent by a PCF to an SMF.

In an embodiment, the method further includes at least one of:
sending a QoS latency monitoring report of the uplink transmission and a QoS latency monitoring report of the downlink transmission to a PCF; or
sending the QoS latency monitoring report of the uplink transmission and the QoS latency monitoring report of the downlink transmission to an AF associated with the predetermined service;
in which the QoS latency monitoring report of the uplink transmission and the QoS latency monitoring report of the downlink transmission are correlated using the correlation ID.

In an embodiment, the QoS latency monitoring report of the uplink transmission and the QoS latency monitoring report of the downlink transmission are sent by the UPF and/or an access network device in case of monitoring the transmission latency parameter of the uplink transmission, determining that the transmission latency parameter of the uplink transmission meets a first uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a first downlink subscribe event triggering condition, and determining the QoS latency monitoring report of the uplink transmission through the correlation ID.

According to a fourth aspect of the embodiments of the present disclosure, an information transmission method is provided and performed by an access network device, including:
receiving a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is indicated by a PCC rule associated with the predetermined service sent by a PCF to an SMF.

In an embodiment, the method further includes:
sending a QoS latency monitoring report of the uplink transmission and a QoS latency monitoring report of the downlink transmission to a PCF via a UPF; in which the QoS latency monitoring report of the uplink transmission and the QoS latency monitoring report of the downlink transmission are correlated using the correlation ID.

In an embodiment, the QoS latency monitoring report of the uplink transmission and the QoS latency monitoring report of the downlink transmission are used for the PCF to update a PCC rule of the uplink transmission of the predetermined service and/or a PCC rule of the downlink transmission of the predetermined service.

In an embodiment, the QoS latency monitoring report of the uplink transmission and the QoS latency monitoring report of the downlink transmission are sent by the access network device in case of monitoring the transmission latency parameter of the uplink transmission, determining that the transmission latency parameter of the uplink transmission meets a second uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the access network device in case of monitoring the transmission latency parameter of the downlink transmission, determining that the transmission latency parameter of the downlink transmission meets a second downlink subscribe event triggering condition, and determining the QoS latency monitoring report of the uplink transmission through the correlation ID.

In an embodiment, updating the PCC rule of the uplink transmission of the predetermined service includes: updating a PDB parameter and/or a PSDB parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

According to a fifth aspect of the embodiments of the present disclosure, an information transmission apparatus is provided and applied to a policy control function (PCF), including:
a processing module, configured to determine and send a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is sent by the PCF to a session management function (SMF), and is sent by the SMF to at least one of:
an access network device; or
a user plane function (UPF).

In an embodiment, the correlation ID is indicated by a policy and charging control (PCC) rule associated with the predetermined service.

In an embodiment, the apparatus further includes:
a transceiver module, configured to receive a quality of service (QoS) latency monitoring report of the uplink transmission and a QoS latency monitoring report of the downlink transmission, in which the QoS latency monitoring report of the uplink transmission and the QoS latency monitoring report of the downlink transmission are correlated using the correlation ID;
in which the processor module is further configured to update a PCC rule of the uplink transmission of the predetermined service and/or a PCC rule of the downlink transmission of the predetermined service based on the QoS latency monitoring report of the uplink transmission and the QoS latency monitoring report of the downlink transmission.

In an embodiment, the transceiver module is further configured to send the QoS latency monitoring report of the uplink transmission and the QoS latency monitoring report of the downlink transmission to an application function (AF) associated with the predetermined service;
the transceiver module is further configured to receive AF session update information sent by the AF in response to the QoS latency monitoring report of the uplink transmission and the QoS latency monitoring report of the downlink transmission; and
the processor module is further configured to update the PCC rule of the uplink transmission of the predetermined service and/or the PCC rule of the downlink transmission of the predetermined service based on the AF session update information.

In an embodiment, the transceiver module is further configured to perform at least one of:
receiving the QoS latency monitoring report of the uplink transmission and the QoS latency monitoring report of the downlink transmission sent by a user plane function (UPF); or
receiving the QoS latency monitoring report of the uplink transmission and the QoS latency monitoring report of the downlink transmission sent by an access network device via a UPF.

In an embodiment, the apparatus further includes:
a transceiver module, configured to receive AF session update information sent by an AF associated with the predetermined service in response to the QoS latency monitoring report of the uplink transmission and the QoS latency monitoring report of the downlink transmission, in which the QoS latency monitoring report of the uplink transmission and the QoS latency monitoring report of the downlink transmission are sent by a UPF to the AF;
in which the processor is further configured to update the PCC rule of the uplink transmission of the predetermined service and/or the PCC rule of the downlink transmission of the predetermined service based on the AF session update information.

In an embodiment, the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets an uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a downlink subscribe event triggering condition, and determining the QoS latency monitoring report of the uplink transmission through the correlation ID.

In an embodiment, updating the PCC rule of the uplink transmission of the predetermined service includes: updating a data packet delay budget (PDB) parameter and/or a data packet set delay budget (PSDB) parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In an embodiment, the processor is further configured to:
determine the transmission latency parameter of the uplink transmission of the data flow and/or the transmission latency parameter of the downlink transmission of the data flow based on a transmission latency parameter of a bidirectional transmission of the data flow of the predetermined service.

In an embodiment, the predetermined service further includes at least one of:
an extended reality multimedia (XRM) service; or
a multimodal service.

According to a sixth aspect of the embodiments of the present disclosure, an information transmission apparatus is provided and applied to an AF, including:
a transceiver module, configured to send a transmission latency parameter of a bidirectional transmission of a predetermined service to a policy control function (PCF), in which the transmission latency parameter of the bidirectional transmission is used for the PCF to determine a correlation identifier (ID) of the predetermined service, and the correlation ID is used to correlate a transmission latency parameter of an uplink transmission with a transmission latency parameter of a downlink transmission of a data flow of the predetermined service.

In an embodiment, the correlation ID is sent by the PCF via an SMF to at least one of: an access network device or a UPF.

In an embodiment, the correlation ID is carried in a PCC rule associated with the predetermined service sent by the PCF to the SMF.

In an embodiment, the transceiver module is further configured to receive a QoS latency monitoring report of the uplink transmission and a QoS latency monitoring report of the downlink transmission sent by a UPF or the PCF.

In an embodiment, the apparatus further includes a processing module, configured to:
determine whether to send AF session update information to the PCF based at least on the QoS latency monitoring report of the uplink transmission and the QoS latency monitoring report of the downlink transmission.

In an embodiment, the AF session update information is used for the PCF to update a PCC rule of the uplink transmission of the predetermined service and/or a PCC rule of the downlink transmission of the predetermined service.

In an embodiment, the AF session update information is used for the PCF to update a PDB parameter and/or a PSDB parameter in the PCC rule of the uplink transmission of the predetermined service and/or a PDB parameter and/or a PSDB parameter in the PCC rule of the downlink transmission of the predetermined service.

In an embodiment, the transceiver module is further configured to receive the QoS latency monitoring report of the uplink transmission and the QoS latency monitoring report of the downlink transmission sent by the UPF via an NEF;
and/or
the transceiver module is further configured to receive the QoS latency monitoring report of the uplink transmission and the QoS latency monitoring report of the downlink transmission sent by the PCF via an NEF.

In an embodiment, the transmission latency parameter of the bidirectional transmission is used for the PCF to determine the transmission latency parameter of the uplink transmission and the transmission latency parameter of the downlink transmission of the data flow of the predetermined service.

In an embodiment, the transceiver module is further configured to perform at least one of:
sending the transmission latency parameter of the bidirectional transmission of the predetermined service to the PCF via an NEF;
sending the transmission latency parameter of the bidirectional transmission of the predetermined service to the PCF via a time sensitive communication and time synchronization function (TSCTSF); or
sending the transmission latency parameter of the bidirectional transmission of the predetermined service to the PCF via an NEF and the TSCTSF.

According to a seventh aspect of the embodiments of the present disclosure, an information transmission apparatus is provided and applied to a UPF, including:
a transceiver module, configured to receive a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is indicated by a PCC rule associated with the predetermined service sent by a PCF to an SMF.

In an embodiment, the transceiver module is further configured to perform at least one of:
sending a QoS latency monitoring report of the uplink transmission and a QoS latency monitoring report of the downlink transmission to a PCF; or
sending the QoS latency monitoring report of the uplink transmission and the QoS latency monitoring report of the downlink transmission to an AF associated with the predetermined service;
in which the QoS latency monitoring report of the uplink transmission and the QoS latency monitoring report of the downlink transmission are correlated using the correlation ID.

In an embodiment, the QoS latency monitoring report of the uplink transmission and the QoS latency monitoring report of the downlink transmission are sent by the UPF and/or an access network device in case of monitoring the transmission latency parameter of the uplink transmission, determining that the transmission latency parameter of the uplink transmission meets a first uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a first downlink subscribe event triggering condition, and determining the QoS latency monitoring report of the uplink transmission through the correlation ID.

According to an eighth aspect of the embodiments of the present disclosure, an information transmission apparatus is provided and applied to an access network device, including:
a transceiver module, configured to receive a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is indicated by a PCC rule associated with the predetermined service sent by a PCF to an SMF.

In an embodiment, the transceiver module is further configured to:
send a QoS latency monitoring report of the uplink transmission and a QoS latency monitoring report of the downlink transmission to a PCF via a UPF; in which the QoS latency monitoring report of the uplink transmission and the QoS latency monitoring report of the downlink transmission are correlated using the correlation ID.

In an embodiment, the QoS latency monitoring report of the uplink transmission and the QoS latency monitoring report of the downlink transmission are used for the PCF to update a PCC rule of the uplink transmission of the predetermined service and/or a PCC rule of the downlink transmission of the predetermined service.

In an embodiment, the QoS latency monitoring report of the uplink transmission and the QoS latency monitoring report of the downlink transmission are sent by the access network device in case of monitoring the transmission latency parameter of the uplink transmission, determining that the transmission latency parameter of the uplink transmission meets a second uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the access network device in case of monitoring the transmission latency parameter of the downlink transmission, determining that the transmission latency parameter of the downlink transmission meets a second downlink subscribe event triggering condition, and determining the QoS latency monitoring report of the uplink transmission through the correlation ID.

In an embodiment, updating the PCC rule of the uplink transmission of the predetermined service includes: updating a PDB parameter and/or a PSDB parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

According to a ninth aspect of the embodiments of the present disclosure, a communication device is provided, including:
a processor and
a memory for storing instructions executable by the processor.

The processor is configured to perform the method of the embodiments of the first aspect, the second aspect, the third aspect or the fourth aspect when executing the instructions.

According to a tenth aspect of the embodiments of the present disclosure, a computer storage medium for storing computer-executable programs is provided. When the computer-executable programs are executed, the method of the embodiments of the first aspect, the second aspect, the third aspect or the fourth aspect is implemented.

According to an eleventh aspect of the embodiments of the present disclosure, a core network device is provided. The core network device includes a PCF and a UPF. The PCF is configured to perform the method of the embodiments of the first aspect, the UPF is configured to perform the method of the embodiments of the third aspect.

With the information transmission method and apparatus, the communication device and the storage medium provided by the embodiments of the present disclosure, the PCF determines and sends the correlation ID of the predetermined service, the correlation ID is used to correlate a transmission latency parameter of an uplink transmission with a transmission latency parameter of a downlink transmission of a data flow of the predetermined service. Since the correlation ID is used to correlate the transmission latency parameter of the uplink transmission with the transmission latency parameter of the downlink transmission, the core network element and/or the access network device may determine the transmission latency parameter of the uplink transmission and the transmission latency parameter of the downlink transmission based on the correlation ID and perform coordinative processing on the transmission latency parameter of the uplink transmission and the transmission latency parameter of the downlink transmission, thereby improving a coordinative efficiency of the transmission latency parameter of the uplink transmission and the transmission latency parameter of the uplink transmission, and further meeting bidirectional transmission latency requirement of the predetermined service and improving a success transmission rate of the predetermined service.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure, and serve to explain the principle of the embodiments of the present disclosure together with the specification.
FIG. 1 is a schematic diagram of a wireless communication system according to an embodiment of the present disclosure;
FIG. 2 is a flowchart of an information transmission method according to an embodiment of the present disclosure;
FIG. 3 is a flowchart of an information transmission method according to an embodiment of the present disclosure;
FIG. 4 is a flowchart of an information transmission method according to an embodiment of the present disclosure;
FIG. 5 is a flowchart of an information transmission method according to an embodiment of the present disclosure;
FIG. 6 is a flowchart of an information transmission method according to an embodiment of the present disclosure;
FIG. 7 is a flowchart of an information transmission method according to an embodiment of the present disclosure;
FIG. 8 is a flowchart of an information transmission method according to an embodiment of the present disclosure;
FIG. 9 is a flowchart of an information transmission method according to an embodiment of the present disclosure;
FIG. 10 is a flowchart of an information transmission method according to an embodiment of the present disclosure;
FIG. 11 is a flowchart of an information transmission method according to an embodiment of the present disclosure;
FIG. 12 is a flowchart of an information transmission method according to an embodiment of the present disclosure;
FIG. 13 is a flowchart of an information transmission method according to an embodiment of the present disclosure;
FIG. 14 is a flowchart of an information transmission method according to an embodiment of the present disclosure;
FIG. 15 is a flowchart of an information transmission method according to an embodiment of the present disclosure;
FIG. 16 is a flowchart of an information transmission method according to an embodiment of the present disclosure;
FIG. 17 is a flowchart of an information transmission method according to an embodiment of the present disclosure;
FIG. 18 is a flowchart of an information transmission method according to an embodiment of the present disclosure;
FIG. 19 is a flowchart of an information transmission method according to an embodiment of the present disclosure;
FIG. 20 is a flowchart of an information transmission method according to an embodiment of the present disclosure;
FIG. 21 is a block diagram of an information transmission apparatus according to an embodiment of the present disclosure;
FIG. 22 is a block diagram of an information transmission apparatus according to an embodiment of the present disclosure;
FIG. 23 is a block diagram of an information transmission apparatus according to an embodiment of the present disclosure;
FIG. 24 is a block diagram of an information transmission apparatus according to an embodiment of the present disclosure;
FIG. 25 is a block diagram of a user equipment (UE) according to an embodiment of the present disclosure; and
FIG. 26 is a block diagram of a base station according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

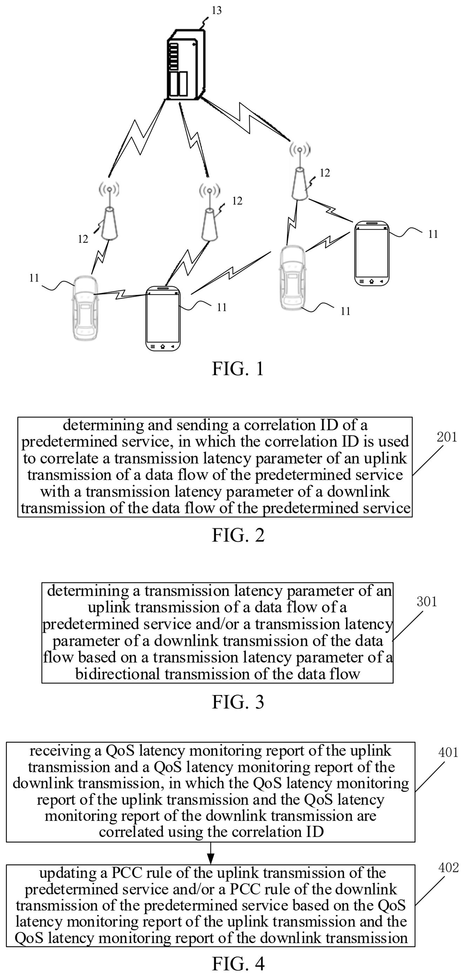

Please refer to FIG. 1, which is a schematic diagram of a wireless communication system according to an embodiment of the present disclosure. As illustrated in FIG. 1, the wireless communication system is a communication system based on the cellular mobile communication technology, and the wireless communication system may include several terminals 11, and several base stations 12.

The terminal 11 may be a device that provides voice and/or data connectivity to users. The terminal 11 may communicate with one or more core network nodes via a radio access network (RAN). The terminal 11 may be an Internet of Things (IoT) terminal, such as a sensor device, a mobile phone (or a "cellular" phone), and a computer with an IoT terminal. For example, it may be a fixed, portable, pocket-sized, handheld, computer-built-in or vehicle-mounted device. For example, it may be a station (STA), a subscriber unit, a subscriber station, a mobile station, a mobile, a remote station, an access point, a remote terminal, an access terminal, a user terminal, a user agent, a user device, or a user (user equipment, UE). Alternatively, the terminal 11 may also be a device of an unmanned aerial vehicle (UAV). Alternatively, the terminal 11 may also be a vehicle-mounted device, for example, it may be a driving computer with a wireless communication function, or a wireless communication device externally connected to the driving computer. Alternatively, the terminal 11 may also be a roadside device, for example, a street lamp, a signal lamp or other roadside devices with a wireless communication function.

The base station 12 may be an access network device in the wireless communication system. The wireless communication system may be a fourth-generation mobile communication (4G) system, also known as a long-term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as new generation-radio access network (NG-RAN). Alternatively, the wireless communication system may be a machine type communication (MTC) system.

The base station 12 may be an evolved access device (eNB) adopted in the 4G system. Alternatively, the base station 12 may also be a base station (gNB) adopting a centralized distributed architecture in the 5G system. When the base station 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the base station 12 is not limited in the embodiments of the present disclosure.

A wireless connection may be established between the base station 12 and the terminal 11 via a wireless air interface. In different implementations, the wireless air interface is a wireless air interface based on a fourth generation mobile communication network technology (4G) standard; or, the wireless air interface is a wireless air interface based on a fifth generation mobile communication network technology (5G) standard, for example, the wireless air interface is a new radio interface; or, the wireless air interface may also be a wireless air interface based on a next generation mobile communication network technology standard of the 5G standard.

An E2E (End to End) or D2D (device to device) connection may be established between terminals 11, for example, in scenarios such as V2V (vehicle to vehicle) communication, V2I (vehicle to Infrastructure) communication and V2P (vehicle to pedestrian) communication in vehicle to everything (V2X) communication.

In some embodiments, the wireless communication system may further include a network management device 13.

The several base stations 12 are connected to the network management device 13, respectively. The network management device 13 may be a core network node in the wireless communication system. For example, the network management device 13 may be a mobility management entity (MME) in an evolved packet core (EPC) network. Alternatively, the network management device 13 may also be other core network nodes, such as a serving gateway (SGW), a public data network gateway (PGW), a policy and charging rules function (PCRF) or a home subscriber server (HSS), an access and mobility management function (AMF), a policy control function (PCF), a unified data management (UDM), a user plane function (UPF), a network exposure function (NEF), a session management function (SMF) or the like. The implementation form of the network management device 13 is not limited in the embodiments of the present disclosure.

In order to facilitate understanding of those skilled in the art, the embodiments of the present disclosure provide multiple implementations to clearly illustrate the technical solution of the embodiments of the present disclosure. Of course, those skilled in the art may understand that the multiple embodiments provided by the embodiments of the present disclosure may be implemented separately, or may be implemented together with the methods of other embodiments of the embodiments of the present disclosure, or may be implemented together with some methods in the related art separately or in combination, which is not limited in the embodiments of the present disclosure.

For data flows of extended reality multimedia (XRM) services, some common characteristics exist either among the data flows, or in requirements of these data flows for the network transmission. Effective identification and utilization of these common characteristics will be more conducive to the transmission and control of networks and services, as well as service assurance and improvement of user experience.

XRM services require the mobile communication system (such as 5G mobile communication system) to comprehensively consider Quality of Service (QoS) characteristics of the relevant data flows of the services, for example, considering whether parameters such as latency-critical guaranteed bit rate (GBR) data flow; guaranteed flow bit rate (GFBR); protocol data unit (PDU) delay budget (PDB); default maximum data burst volume (MDBV); and PDU set delay budget (PSDB) can be met and coordinated simultaneously. It involves multiple XRM data flows of one UE and multiple XRM data flows of multiple UEs, and consistency guarantees of QoS authorization and implementation between each other. Therefore, how the uplink and downlink transmissions coordinately meet a bidirectional latency requirement is a key issue that needs to be studied.

An application function (AF) may provide a PDB as a latency requirement when requesting QoS of an XRM service, or provide a bidirectional request indication as an indication of whether the bidirectional latency needs to be considered, for reference by the network to perform authorization.

In an actual business process, latency is affected by various factors in the network and changes dynamically and continuously. Therefore, a real-time or quasi-real-time network latency status and a real-time latency requirement of the AF service may directly affect the QoS authorization of each data flow, and even affect whether support of the 5GS XRM service function can be realized. The relevant technology does not provide a perfect mechanism to combine the network latency status and latency requirement to achieve the QoS authorization, that is, there is no corresponding technical solution to support PCF's reasonable QoS authorization for the bidirectional latency requirement of the data flow of the XRM service.

Therefore, how to adjust latency parameters of the data flow of the XRM service according to the network latency status to meet a transmission requirement of the XRM service is an urgent problem to be solved.

As shown in FIG. 2, an embodiment provides an information transmission method, which may be performed by a policy control function (PCF) and includes the following steps.

At step 201, a correlation identifier (ID) of a predetermined service is determined and sent. The correlation ID is used to correlate a transmission latency parameter of an uplink transmission of a data flow of the predetermined service with a transmission latency parameter of a downlink transmission of the data flow of the predetermined service.

In an embodiment, the predetermined service includes at least one of:
an XRM service; or
a multimodal service.

The XRM service may contain multiple data flows with a synchronization requirement and is used to transmit information in various media forms such as text, sound, and images.

The multimodal service may contain multiple data flows of different modes with the synchronization requirement.

In a possible implementation, sending the correlation ID of the predetermined service includes at least one of:
sending the correlation ID of the predetermined service directly; or
sending the correlation ID of the predetermined service indirectly.

In a possible implementation, sending the correlation ID of the predetermined service directly includes sending the correlation ID of the predetermined service by the PCT to a session management function (SMF).

In a possible implementation, sending the correlation ID of the predetermined service indirectly includes sending the correlation ID of the predetermined service by the PCT to a user plane function (UPF) and/or an access network device via an SMF.

In a possible implementation, the predetermined service may have a bidirectional transmitted data flow.

In a possible implementation, the correlation ID may include at least one of: a correlation ID, a peer ID, a bidirectional transmission group ID (also called round trip group ID), a peer indication, or a common ID. The name of the correlation ID is not limited herein.

In a possible implementation, the correlation ID may be generated based on the common ID, or the correlation ID may be generated by mapping based on the common ID.

In a possible implementation, the correlation ID is correlated with the transmission latency parameter of the uplink transmission of the data flow of the predetermined service, and is correlated with the transmission latency parameter of the downlink transmission of the data flow of the predetermined service. That is, a core network node or an access network device may determine the transmission latency parameter of the uplink transmission of the data flow of the predetermined service and the transmission latency parameter of the downlink transmission of the data flow of the predetermined service through the correlation ID.

The transmission latency parameter may include, but is not limited to, a latency configuration parameter associated with transmission of the data flow.

The transmission latency parameter may include at least one of: transmission latency, data packet delay budget (PDB), or data packet set delay budget (PSDB). The PDB and/or the PSDB may belong to 5QI (5G QoS identifier). The PSDB defines an upper limit of the transmission latency of a PDU set between a UE and an N6 termination point at a UPF.

In a possible implementation, the PCF may determine the transmission latency of the uplink transmission of the data flow and/or the transmission latency of the downlink transmission of the data flow based on a transmission latency parameter of the bidirectional transmission of the data flow of the predetermined service. The transmission latency parameter of the bidirectional transmission of the data flow of the predetermined service may be indicated by an AF associated with the predetermined service to the PCF.

In a possible implementation, the AF may send the transmission latency parameter of the bidirectional transmission of the data flow of the predetermined service to the PCF via an NEF.

In a possible implementation, the transmission latency parameter of the bidirectional transmission may represent an allowed maximum transmission latency of the data flow of the predetermined service during the uplink transmission and the downlink transmission.

In a possible implementation, a sum of the transmission latency of the uplink transmission of the data flow and the transmission latency of the uplink transmission of the data flow is less than or equal to a transmission latency of the bidirectional transmission of the data flow of the predetermined service.

In a possible implementation, the correlation ID is correlated with at least one of:
a transmission latency parameter of an uplink service data flow of the predetermined service;
a transmission latency parameter of a downlink service data flow of the predetermined service;
a transmission latency parameter of a QoS flow of the predetermined service;
a policy and charging control (PCC) associated with the predetermined service; or
5QI associated with the predetermined service.

In a possible implementation, the PCF may generate the correlation ID based on a predetermined determination strategy.

In a possible implementation, one correlation ID may be associated with one predetermined service, or one correlation ID may be associated with one type of predetermined services.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In a possible implementation, a requirement of the predetermined service for the transmission latency parameter may include at least one of: a requirement of the predetermined service for the transmission latency parameter of the bidirectional transmission of the data flow; a requirement of the predetermined service for the transmission latency parameter of the uplink transmission of the data flow; or a requirement of the predetermined service for the transmission latency parameter of the downlink transmission of the data flow.

In a possible implementation, the PCF may determine that the network supports a bidirectional transmission latency rule or 5QI update for the predetermined service based on the transmission latency parameter of the bidirectional transmission of the predetermined service (i.e., the requirement for the transmission latency parameter), the subscription information, or the operator policy, and then generate the correlation ID.

In a possible implementation, the correlation ID may be determined based on one or more of the transmission latency parameter of the bidirectional transmission, the subscription information associated with the predetermined service, or the operator policy associated with the predetermined service.

For example, the correlation ID may be allocated based on the operator policy, which includes a rule for allocating the correlation ID.

In the related art, the uplink transmission and the downlink transmission of the data flow of the predetermined service are independent from each other, and the transmission latency parameter of the uplink transmission and the transmission latency parameter of the downlink transmission are not associated with each other, so it is impossible to achieve coordinated adjustment of the transmission latency parameter of the uplink transmission and the transmission latency parameter of the downlink transmission.

The correlation ID is used to correlate the transmission latency parameter of the uplink transmission and the transmission latency parameter of the downlink transmission. A core network element and/or an access network device may determine the transmission latency parameter of the uplink transmission and the transmission latency parameter of the downlink transmission based on the correlation ID, and perform coordinated processing on the transmission latency parameter of the uplink transmission and the transmission latency parameter of the downlink transmission, thereby improving a coordinative efficiency of the transmission latency parameter of the uplink transmission and the transmission latency parameter of the uplink transmission, and further meeting a bidirectional transmission latency requirement of the predetermined service and improving a success transmission rate of the predetermined service.

In a possible implementation, the PCF receives the transmission latency parameter of the bidirectional transmission sent by the AF associated with the predetermined service.

The transmission latency parameter of the bidirectional transmission may be a bidirectional transmission latency requirement of the predetermined service.

The AF associated with the predetermined service may include, but is not limited to, an AF requesting to perform the predetermined service.

For example, the AF associated with the predetermined service may be an AF requesting session resources for the predetermined service from the core network node.

In a possible implementation, the AF may send the bidirectional transmission latency requirement of the predetermined service to the PCF in a process of requesting the session resources.

The AF may provide the transmission latency parameter of the bidirectional transmission to the PCF, for the PCF to determine the transmission latency parameter of the uplink transmission and/or the transmission latency parameter of the uplink transmission.

The AF may send the transmission latency parameter of the bidirectional transmission to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a time sensitive communication and time synchronization function (TSCTSF); or
3) sending to the PCF via a TSCTSF and an NEF.

As shown in FIG. 3, an embodiment provides an information transmission method, which may be performed by a PCF and includes the following steps.

At step 301, a transmission latency parameter of an uplink transmission of a data flow of a predetermined service and/or a transmission latency parameter of a downlink transmission of the data flow is determined based on a transmission latency parameter of a bidirectional transmission of the data flow.

Regarding the transmission latency parameter of the bidirectional transmission, the transmission latency parameter of the uplink transmission and/or the transmission latency parameter of the downlink transmission, reference may be made to the embodiment shown in FIG. 2, which are not repeated here. The transmission latency parameter of the bidirectional transmission may represent a transmission latency of the bidirectional transmission, i.e., an allowed maximum transmission latency in the bidirectional transmission of the data flow.

In a possible implementation, the PCF may divide the transmission latency parameter of the bidirectional transmission into the transmission latency parameter of the uplink transmission and the transmission latency parameter of the downlink transmission, and determine a PCC rule of the uplink transmission of the data flow of the predetermined service and a PCC rule of the downlink transmission of the data flow of the predetermined service based on the transmission latency parameter of the uplink transmission and the transmission latency parameter of the downlink transmission, respectively.

In a possible implementation, the PCC rule of the uplink transmission and the PCC rule of the downlink transmission of the data flow of the predetermined service may be respectively associated with a QoS monitoring policy of the uplink transmission and a QoS monitoring policy of the uplink transmission, so that the UPF and an access network device may monitor an uplink transmission latency and a downlink transmission latency.

For example, the PCF may determine a PDB of the uplink transmission and a PDB of the downlink transmission according to a bidirectional transmission latency, generate the PCC rule of a service data flow (SDF) corresponding to the uplink transmission and a PCC rule of a SDF corresponding to the downlink transmission, and consider the corresponding PDBs to allocate corresponding 5QIs to the two PCC rules. The above two PCC rules are respectively associated with the QoS monitoring policy of the uplink transmission and the QoS monitoring policy of the uplink transmission, for monitoring the uplink transmission latency and the downlink transmission latency respectively.

In an embodiment, the correlation ID is sent by the PCF to an SMF, and is sent by the SMF to at least one of:
an access network device; or
a UPF.

The access network device and/or the UPF may be used to monitor and report the transmission latency parameter of the uplink transmission and/or the transmission latency parameter of the downlink transmission of the data flow to a core network element. The SMF may send the correlation ID to the access network device and/or the UPF.

When the access network device and/or the UPF monitors the transmission latency parameter, the correlation ID may be used to correlate the transmission latency parameter of the uplink transmission with the transmission latency parameter of the downlink transmission.

In an embodiment, the correlation ID is indicated by a PCC rule associated with the predetermined service.

In a possible implementation, the correlation ID may be carried in the PCC rule.

In a possible implementation, the PCC rule may carry index information of the correlation ID, and the index information is used to retrieve the correlation ID in an index table of the correlation ID.

In a possible implementation, the PCC rule includes at least one of: a PCC rule of the uplink transmission, or a PCC rule of the downlink transmission.

For example, when the PCF sends the PCC rule to the SMF, it may simultaneously send a correlation ID for correlating the transmission latency parameter of the uplink transmission and/or the transmission latency parameter of the downlink transmission, and the SMF may send the correlation ID to a RAN and a UPF.

In a possible implementation, the PCF may carry the correlation ID in the PCC rule and send it to the SMF, and the SMF may take out the correlation ID and send it to an access network device and/or a UPF.

In a possible implementation, the PCF may add a new field in the PCC rule to carry the correlation ID.

In a possible implementation, the PCF may carry it in an existing field within the PCC rule, such as a service data flow template, or a 5G QoS identifier.

In a possible implementation, the PCF may separately send the correlation ID to the SMF, and the SMF may send it to an access network device and/or a UPF.

As shown in FIG. 4, an embodiment provides an information transmission method, which may be performed by a PCF and includes the following steps.

At step 401, a QoS latency monitoring report of an uplink transmission and a QoS latency monitoring report of a downlink transmission are received, in which the QoS latency monitoring report of the uplink transmission and the QoS latency monitoring report of the downlink transmission are correlated using a correlation ID.

At step 402, a PCC rule of the uplink transmission of a predetermined service and/or a PCC rule of the downlink transmission of the predetermined service is updated based on the QoS latency monitoring report of the uplink transmission and the QoS latency monitoring report of the downlink transmission.

In a possible implementation, the PCF may receive the QoS latency monitoring report of the uplink transmission and the QoS latency monitoring report of the downlink transmission sent by a UPF and/or an access network device.

In a possible implementation, the correlation ID is determined by the PCF.

After the PCF updates the PCC rule, the PCF may indicate the correlation ID through an updated PCC rule. The updated PCC rule may indicate the correlation ID in a manner similar to the manner in which the PCC rule indicates the correlation ID in the embodiment shown in FIG. 3, which will not be described in detail here.

In a possible implementation, the UPF and/or the access network device may send the QoS latency monitoring report of the uplink transmission and the QoS latency monitoring report of the downlink transmission to a packet control gateway (PCG) directly or indirectly.

The UPF and/or the access network device may monitor a transmission latency parameter of the uplink transmission and/or a transmission latency parameter of the downlink transmission, and send the QoS latency monitoring report of the uplink transmission and the QoS latency monitoring report of the downlink transmission to the PCF, so that the PCF adjusts the PCC rule of the uplink transmission and/or the PCC rule of the downlink transmission based on the received QoS latency monitoring reports, to enable transmission of the data flow to adapt to the current network condition.

In a possible implementation, the QoS latency monitoring report of the uplink transmission may be used to indicate the transmission latency parameter of the current uplink transmission, and the QoS latency monitoring report of the downlink transmission may be used to indicate the transmission latency parameter of the current downlink transmission.

In a possible implementation, updating the PCC rule of the uplink transmission of the predetermined service and/or the PCC rule of the downlink transmission of the predetermined service includes at least one of:
adjusting the PCC rule of the uplink transmission and/or the PCC rule of the downlink transmission; or
creating a new PCC rule for the uplink transmission and/or a new PCC rule for the downlink transmission.

For example, the PCF may update the PCC rule of the uplink transmission of the predetermined service and/or the PCC rule of the downlink transmission of the predetermined service, so that a sum of an uplink transmission latency of the data flow and the uplink transmission latency of the data flow is less than or equal to a bidirectional transmission latency requirement of the data flow.

In an embodiment, updating the PCC rule of the uplink transmission of the predetermined service includes: updating a PDB parameter and/or a PSDB parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

In a possible implementation, the PCF may adjust the PDB parameter and/or the PSDB parameter of the uplink transmission and/or adjust the PDB parameter and/or the PSDB parameter of the downlink transmission based on the QoS latency monitoring report of the uplink transmission and the QoS latency monitoring report of the downlink transmission.

In a possible implementation, updating the PCC rule of the uplink transmission of the predetermined service includes: updating the 5QI in the PCC rule of the uplink transmission of the predetermined service.

In a possible implementation, updating the PCC rule of the downlink transmission of the predetermined service includes: updating the 5QI in the PCC rule of the downlink transmission of the predetermined service.

For example, based on the QoS latency monitoring report of the uplink transmission and the QoS latency monitoring report of the downlink transmission, the PCF may authorize a new PDB parameter for the uplink transmission and/or a new PDB parameter for the downlink transmission (for example, a new 5QI corresponding to the PDBPDB may be selected).

In an embodiment, receiving the QoS latency monitoring report of the uplink transmission and the QoS latency monitoring report of the downlink transmission includes at least one of:
receiving the QoS latency monitoring report of the uplink transmission and the QoS latency monitoring report of the downlink transmission sent by a UPF; or
receiving the QoS latency monitoring report of the uplink transmission and the QoS latency monitoring report of the downlink transmission sent by an access network device via a UPF.

In a possible implementation, the QoS latency monitoring report of the uplink transmission and the QoS latency monitoring report of the downlink transmission may be sent from a UPF to the PCF through a control plane procedure from the UPF to an SMF to the PCF.

In a possible implementation, the QoS latency monitoring report of the uplink transmission and the QoS latency monitoring report of the downlink transmission may be reported to the PCF by an access network device in performing QoS monitoring via a UPF.

In a possible implementation, the QoS latency monitoring report of the uplink transmission and the QoS latency monitoring report of the downlink transmission received from the UPF may be monitored by the UPF and sent to the PCF, or may be monitored by an access network device and sent to the PCF via the UPF.

In an embodiment, the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets an uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a downlink subscribe event triggering condition, and determining the QoS latency monitoring report of the uplink transmission through the correlation ID.

For example, when the UPF monitors that the transmission latency parameter of the uplink transmission meets the uplink subscribe event triggering condition, it may send a latency monitoring report to the PCF and/or an AF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the UPF monitors that the transmission latency parameter of the downlink transmission meets the downlink subscribe event triggering condition, it may send a latency monitoring report to the PCF and/or an AF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the uplink transmission meets the uplink subscribe event triggering condition, it may send a latency monitoring report to the PCF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the downlink transmission meets the downlink subscribe event triggering condition, it may send a latency monitoring report to the PCF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

In a possible implementation, the uplink subscribe event adopted by the UPF and the uplink subscribe event adopted by the access network device may be the same or different, which are not limited here.

In a possible implementation, the downlink subscribe event adopted by the UPF and the downlink subscribe event adopted by the access network device may be the same or different, which are not limited here.

In an embodiment, updating the PCC rule of the uplink transmission of the predetermined service and/or the PCC rule of the downlink transmission of the predetermined service based on the QoS latency monitoring report of the uplink transmission and the QoS latency monitoring report of the downlink transmission includes:
sending the QoS latency monitoring report of the uplink transmission and the QoS latency monitoring report of the downlink transmission to an AF associated with the predetermined service;
receiving AF session update information sent by the AF in response to the QoS latency monitoring report of the uplink transmission and the QoS latency monitoring report of the downlink transmission; and
updating the PCC rule of the uplink transmission of the predetermined service and/or the PCC rule of the downlink transmission of the predetermined service based on the AF session update information.

Here, the PCF does not directly determine whether to update the PCC rule of the uplink transmission and/or the PCC rule of the downlink transmission.

The PCF may send the received QoS latency monitoring report of the uplink transmission and the QoS latency monitoring report of the downlink transmission to the AF.

Here, the QoS latency monitoring report of the uplink transmission and the QoS latency monitoring report of the downlink transmission sent by the PCF may be sent directly to the AF by the PCF, or may be sent to the AF by the PCF via an NEF.

After receiving the QoS latency monitoring report of the uplink transmission and the QoS latency monitoring report of the downlink transmission, the AF may determine whether to send AF session update information for the PCF to update the PCC rule of the uplink transmission and/or the PCC rule of the downlink transmission.

In a possible implementation, the AF session update information includes a transmission latency parameter of a bidirectional transmission of a data flow of the predetermined service.

In a possible implementation, the QoS latency monitoring report of the uplink transmission and the QoS latency monitoring report of the downlink transmission are used to trigger modification of an AF session of the predetermined service, and further trigger update of the PCC rule.

For example, the AF may determine whether it is required to provide the transmission latency parameter of the bidirectional transmission to the PCF based on the QoS latency monitoring report of the uplink transmission and the QoS latency monitoring report of the downlink transmission, so that the PCF may update the PCC rule of the uplink transmission and/or the PCC rule of the downlink transmission of the service.

The PCF may update the PCC rule of the uplink transmission and/or the PCC rule of the downlink transmission of the service according to the AF session update information.

The AF may provide the AF session update information to the PCF, so that the PCF may determine the PCC rule of the uplink transmission and/or the PCC rule of the downlink transmission, that is, update the transmission latency parameter of the uplink transmission and/or the transmission latency parameter of the uplink transmission.

The AF may send the AF session update information to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a time sensitive communication and time synchronization function (TSCTSF); or
3) sending to the PCF via a TSCTSF and an NEF.

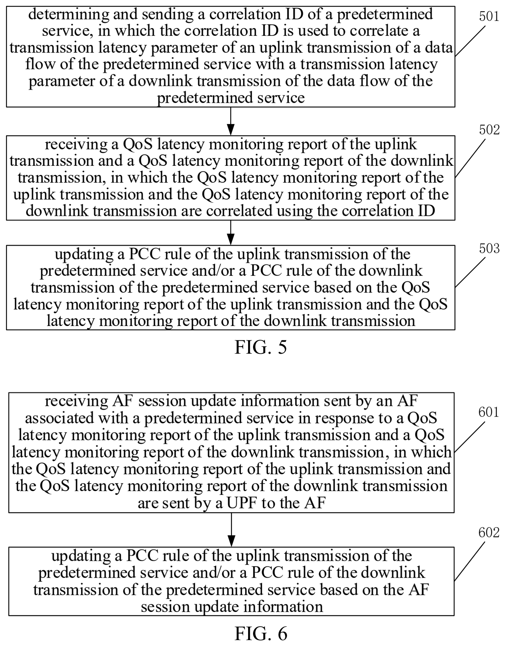

In combination with the embodiments of FIG. 2 and FIG. 4, as shown in FIG. 5, the embodiment provides an information transmission method, which may be performed by a PCF and includes the following steps.

At step 501, a correlation ID of a predetermined service is determined and sent. The correlation ID is used to correlate a transmission latency parameter of an uplink transmission of a data flow of the predetermined service with a transmission latency parameter of a downlink transmission of the data flow of the predetermined service.

At step 502, a QoS latency monitoring report of the uplink transmission and a QoS latency monitoring report of the downlink transmission are received, in which the QoS latency monitoring report of the uplink transmission and the QoS latency monitoring report of the downlink transmission are correlated using the correlation ID.

At step 503, a PCC rule of the uplink transmission of the predetermined service and/or a PCC rule of the downlink transmission of the predetermined service is updated based on the QoS latency monitoring report of the uplink transmission and the QoS latency monitoring report of the downlink transmission.

The embodiment of FIG. 5 includes contents of the embodiment of FIG. 2 and the embodiment of FIG. 4. Therefore, the same explanations or features are not repeated one by one, and reference may be made to the embodiments of the corresponding side.

As shown in FIG. 6, an embodiment provides an information transmission method, which may be performed by a PCF and includes the following steps.

At step 601, AF session update information sent by an AF associated with a predetermined service in response to a QoS latency monitoring report of an uplink transmission and a QoS latency monitoring report of a downlink transmission is received, in which the QoS latency monitoring report of the uplink transmission and the QoS latency monitoring report of the downlink transmission are sent by a UPF to the AF.

At step 602, a PCC rule of the uplink transmission of the predetermined service and/or a PCC rule of the downlink transmission of the predetermined service is updated based on the AF session update information.

The QoS latency monitoring report of the uplink transmission and the QoS latency monitoring report of the downlink transmission have been described in the embodiment of FIG. 4, which will be not repeated here. In a possible implementation, the QoS latency monitoring report of the uplink transmission and the QoS latency monitoring report of the downlink transmission sent by the UPF to the AF may be obtained by the UPF in performing monitoring and sent to the AF, or may be obtained by the UPF in performing monitoring and sent to the AF via the UPF.

Here, the QoS latency monitoring report of the uplink transmission and the QoS latency monitoring report of the downlink transmission may be sent by the UPF to the AF through a user plane notification procedure from the UPF to the AF.

Here, the UPF may report the QoS latency monitoring report of the uplink transmission and the QoS latency monitoring report of the downlink transmission to the AF.

The UPF and/or the access network device determines to report the QoS latency monitoring report of the uplink transmission and the QoS latency monitoring report of the downlink transmission in a similar manner described above, which will be not repeated here.

In a possible implementation, the QoS latency monitoring report of the uplink transmission and the QoS latency monitoring report of the downlink transmission are used to trigger modification of an AF session associated with the predetermined service, and further trigger update of the PCC rule.

After receiving the QoS latency monitoring report of the uplink transmission and the QoS latency monitoring report of the downlink transmission, the AF may determine whether to send the AF session update information to trigger the PCF to update the PCC rule of the uplink transmission and/or the PCC rule of the downlink transmission.

In a possible implementation, the AF session update information includes one of the following:
a transmission latency parameter of a bidirectional transmission of a data flow of a predetermined service; or
a QoS latency monitoring report of the uplink transmission and a QoS latency monitoring report of the downlink transmission.

For example, the AF may determine whether it is required to provide the transmission latency parameter of the bidirectional transmission to the PCF based on the QoS latency monitoring report of the uplink transmission and the QoS latency monitoring report of the downlink transmission, so that the PCF may update the PCC rule of the uplink transmission and/or the PCC rule of the downlink transmission of the service.

The PCF may update the PCC rule of the uplink transmission and/or the PCC rule of the downlink transmission of the service based on the AF session update information.

The AF sends the AF session update information to the PCF in a similar manner as described above, which will not be described in detail here.

The sequence of steps listed in the above embodiment of the information transmission method on the PCF side is not used to limit the execution sequence of each step. Each step may be executed in the sequence listed in each step, or may be executed in other sequences without contradiction. Each step may be implemented as a separate embodiment if there is no contradiction, or multiple steps may be combined together as an embodiment.

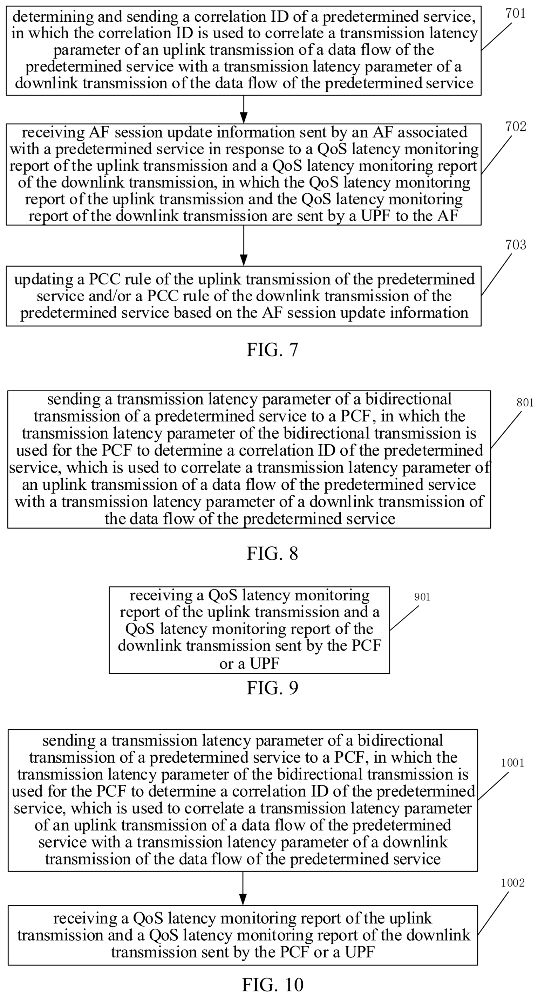

In combination with the embodiments of FIG. 2 and FIG. 6, as shown in FIG. 7, an embodiment provides an information transmission method, which may be performed by a PCF and includes the following steps.

At step 701, a correlation ID of a predetermined service is determined and sent. The correlation ID is used to correlate a transmission latency parameter of an uplink transmission of a data flow of the predetermined service with a transmission latency parameter of a downlink transmission of the data flow of the predetermined service.

At step 702, AF session update information sent by an AF associated with a predetermined service in response to a QoS latency monitoring report of the uplink transmission and a QoS latency monitoring report of the downlink transmission is received, in which the QoS latency monitoring report of the uplink transmission and the QoS latency monitoring report of the downlink transmission are sent by a UPF to the AF.

At step 703, a PCC rule of the uplink transmission of the predetermined service and/or a PCC rule of the downlink transmission of the predetermined service is updated based on the AF session update information.

The embodiment of FIG. 7 includes contents of the embodiment of FIG. 2 and the embodiment of FIG. 6. Therefore, the same explanations or features are not repeated one by one, and reference may be made to the embodiments of the corresponding side.

In each embodiment, the information transmission methods performed on the PCF side, the UPF side, the AF side and the access network side may correspond one to one, so the same explanations or features will not be repeated one by one, and reference may be made to the embodiments of the corresponding side.

As shown in FIG. 8, an embodiment provides an information transmission method, which may be performed by an AF and includes the following steps.

At step 801, a transmission latency parameter of a bidirectional transmission of a predetermined service is sent to a PCF, in which the transmission latency parameter of the bidirectional transmission is used for the PCF to determine a correlation ID of the predetermined service, which is used to correlate a transmission latency parameter of an uplink transmission of a data flow of the predetermined service with a transmission latency parameter of a downlink transmission of the data flow of the predetermined service.

The predetermined service includes, but is not limited to, an XRM service.

In a possible implementation, the predetermined service may have a bidirectional transmitted data flow.

In a possible implementation, the correlation ID may include at least one of: a correlation ID, a peer ID, a bidirectional transmission group ID (also called round trip group ID), a peer indication, or a common ID. The name of the correlation ID is not limited herein.

In a possible implementation, the correlation ID may be generated based on the common ID, or the correlation ID may be generated by mapping based on the common ID.

In a possible implementation, the correlation ID is correlated with the transmission latency parameter of the uplink transmission of the data flow of the predetermined service, and is correlated with the transmission latency parameter of the downlink transmission of the data flow of the predetermined service. That is, a core network node or an access network device may determine the transmission latency parameter of the uplink transmission of the data flow of the predetermined service and the transmission latency parameter of the downlink transmission of the data flow of the predetermined service through the correlation ID.

The transmission latency parameter may include, but is not limited to, a latency configuration parameter associated with transmission of the data flow.

The transmission latency parameter may include at least one of: transmission latency, data packet delay budget (PDB), or data packet set delay budget (PSDB). The PDB and/or the PSDB may belong to 5QI (5G QoS identifier). The PSDB defines an upper limit of the transmission latency of a PDU set between a UE and an N6 termination point at a UPF.

In a possible implementation, the PCF may determine the transmission latency of the uplink transmission of the data flow and/or the transmission latency of the downlink transmission of the data flow based on a transmission latency parameter of the bidirectional transmission of the data flow of the predetermined service. The transmission latency parameter of the bidirectional transmission of the data flow of the predetermined service may be indicated by an AF associated with the predetermined service to the PCF.

In a possible implementation, the PCF receives the transmission latency parameter of the bidirectional transmission sent by the AF associated with the predetermined service.

The transmission latency parameter of the bidirectional transmission may be a bidirectional transmission latency requirement of the predetermined service.

The AF may include, but is not limited to, an AF requesting to perform the predetermined service.

For example, the AF may be an AF requesting session resources for the predetermined service from the core network node.

In a possible implementation, the AF may send the bidirectional transmission latency requirement of the predetermined service to the PCF in a process of requesting the session resources.

The AF may provide the transmission latency parameter of the bidirectional transmission to the PCF, for the PCF to determine the transmission latency parameter of the uplink transmission and/or the transmission latency parameter of the uplink transmission.

The AF may send the transmission latency parameter of the bidirectional transmission to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a time sensitive communication and time synchronization function (TSCTSF); or
3) sending to the PCF via a TSCTSF and an NEF.

In a possible implementation, the AF may send the transmission latency parameter of the bidirectional transmission of the data flow of the predetermined service to the PCF via an NEF.

In a possible implementation, the transmission latency parameter of the bidirectional transmission may represent an allowed maximum transmission latency of the data flow of the predetermined service during the uplink transmission and the downlink transmission.

In a possible implementation, a sum of the transmission latency of the uplink transmission of the data flow and the transmission latency of the uplink transmission of the data flow is less than or equal to a transmission latency of the bidirectional transmission of the data flow of the predetermined service.

In a possible implementation, the correlation ID is correlated with at least one of:
a transmission latency parameter of an uplink service data flow of the predetermined service;
a transmission latency parameter of a downlink service data flow of the predetermined service;
a transmission latency parameter of a QoS flow of the predetermined service;
a policy and charging control (PCC) associated with the predetermined service; or
5QI associated with the predetermined service.

In a possible implementation, the PCF may generate the correlation ID based on a predetermined determination strategy.

In a possible implementation, one correlation ID may be associated with one predetermined service, or one correlation ID may be associated with one type of predetermined services.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In a possible implementation, a requirement of the predetermined service for the transmission latency parameter may include at least one of: a requirement of the predetermined service for the transmission latency parameter of the bidirectional transmission of the data flow; a requirement of the predetermined service for the transmission latency parameter of the uplink transmission of the data flow; or a requirement of the predetermined service for the transmission latency parameter of the downlink transmission of the data flow.

In a possible implementation, the PCF may determine that the network supports a bidirectional transmission latency rule or 5QI update for the predetermined service based on the transmission latency parameter of the bidirectional transmission of the predetermined service (i.e., the requirement for the transmission latency parameter), the subscription information, or the operator policy, and then generate the correlation ID.

In a possible implementation, the correlation ID may be determined based on one or more of the transmission latency parameter of the bidirectional transmission, the subscription information associated with the predetermined service, or the operator policy associated with the predetermined service.

For example, the correlation ID may be allocated based on the operator policy, which includes a rule for allocating the correlation ID.

In the related art, the uplink transmission and the downlink transmission of the data flow of the predetermined service are independent from each other, and the transmission latency parameter of the uplink transmission and the transmission latency parameter of the downlink transmission are not associated with each other, so it is impossible to achieve coordinated adjustment of the transmission latency parameter of the uplink transmission and the transmission latency parameter of the downlink transmission.

The correlation ID is used to correlate the transmission latency parameter of the uplink transmission and the transmission latency parameter of the downlink transmission. A core network element and/or an access network device may determine the transmission latency parameter of the uplink transmission and the transmission latency parameter of the downlink transmission based on the correlation ID, and perform coordinated processing on the transmission latency parameter of the uplink transmission and the transmission latency parameter of the downlink transmission, thereby improving a coordinative efficiency of the transmission latency parameter of the uplink transmission and the transmission latency parameter of the uplink transmission, and further meeting a bidirectional transmission latency requirement of the predetermined service and improving a success transmission rate of the predetermined service.

In an embodiment, the transmission latency parameter of the bidirectional transmission of the data flow of the predetermined service is used for the PCF to determine the transmission latency parameter of the uplink transmission of the data flow and/or the transmission latency parameter of the downlink transmission of the data flow.

The transmission latency parameter of the bidirectional transmission may represent a transmission latency of the bidirectional transmission, i.e., an allowed maximum transmission latency in the bidirectional transmission of the data flow.

In a possible implementation, the PCF may divide the transmission latency parameter of the bidirectional transmission into the transmission latency parameter of the uplink transmission and the transmission latency parameter of the downlink transmission, and determine a PCC rule of the uplink transmission of the data flow of the predetermined service and a PCC rule of the downlink transmission of the data flow of the predetermined service based on the transmission latency parameter of the uplink transmission and the transmission latency parameter of the downlink transmission, respectively.

In a possible implementation, the PCC rule of the uplink transmission and the PCC rule of the downlink transmission of the data flow of the predetermined service may be respectively associated with a QoS monitoring policy of the uplink transmission and a QoS monitoring policy of the uplink transmission, so that the UPF and an access network device may monitor an uplink transmission latency and a downlink transmission latency.

For example, the PCF may determine a PDB of the uplink transmission and a PDB of the downlink transmission according to a bidirectional transmission latency, generate the PCC rule of a service data flow (SDF) corresponding to the uplink transmission and a PCC rule of a SDF corresponding to the downlink transmission, and consider the corresponding PDBs to allocate corresponding 5QIs to the two PCC rules. The above two PCC rules are respectively associated with the QoS monitoring policy of the uplink transmission and the QoS monitoring policy of the uplink transmission, for monitoring the uplink transmission latency and the downlink transmission latency respectively.

In an embodiment, the correlation ID is sent by the PCF to at least one of an access network device or a UPF via an SMF.

In a possible implementation, sending the correlation ID of the predetermined service includes at least one of:
sending the correlation ID of the predetermined service directly; or
sending the correlation ID of the predetermined service indirectly.

In a possible implementation, sending the correlation ID of the predetermined service directly includes sending the correlation ID of the predetermined service by the PCT to a session management function (SMF).

In a possible implementation, sending the correlation ID of the predetermined service indirectly includes sending the correlation ID of the predetermined service by the PCT to a user plane function (UPF) and/or an access network device via an SMF.

In an embodiment, the correlation ID is carried in a PCC rule associated with the predetermined service sent by the PCF to the SMF.

In a possible implementation, the correlation ID may be carried in the PCC rule.

In a possible implementation, the PCC rule may carry index information of the correlation ID, and the index information is used to retrieve the correlation ID in an index table of the correlation ID.

In a possible implementation, the PCC rule includes at least one of: a PCC rule of the uplink transmission, or a PCC rule of the downlink transmission.

For example, when the PCF sends the PCC rule to the SMF, it may simultaneously send a correlation ID for correlating the transmission latency parameter of the uplink transmission and/or the transmission latency parameter of the downlink transmission, and the SMF may send the correlation ID to a RAN and a UPF.

In a possible implementation, the PCF may carry the correlation ID in the PCC rule and send it to the SMF, and the SMF may take out the correlation ID and send it to an access network device and/or a UPF.

In a possible implementation, the PCF may add a new field in the PCC rule to carry the correlation ID.

In a possible implementation, the PCF may carry it in an existing field within the PCC rule, such as a service data flow template, or a 5G QoS identifier.

In a possible implementation, the PCF may separately send the correlation ID to the SMF, and the SMF may send it to an access network device and/or a UPF.

As shown in FIG. 9, an embodiment provides an information transmission method, which may be performed by an AF and includes the following steps.

At step 901, a QoS latency monitoring report of an uplink transmission and a QoS latency monitoring report of a downlink transmission sent by a PCF or a UPF are received.

In a possible implementation, the QoS latency monitoring report of the uplink transmission and the QoS latency monitoring report of the downlink transmission are correlated using a correlation ID.

In an embodiment, receiving the QoS latency monitoring report of the uplink transmission and the QoS latency monitoring report of the downlink transmission sent by the UPF includes receiving the QoS latency monitoring report of the uplink transmission and the QoS latency monitoring report of the downlink transmission sent by the UPF via an NEF.

Receiving the QoS latency monitoring report of the uplink transmission and the QoS latency monitoring report of the downlink transmission sent by the PCF includes receiving the QoS latency monitoring report of the uplink transmission and the QoS latency monitoring report of the downlink transmission sent by the PCF via an NEF.

Here, the QoS latency monitoring report of the uplink transmission and the QoS latency monitoring report of the downlink transmission received by the AF from the UPF may be sent by the UPF directly to the AF, or may be sent by the UPF to the AF via the NEF.

Here, the QoS latency monitoring report of the uplink transmission and the QoS latency monitoring report of the downlink transmission received by the AF from the PCF may be sent by the PCF directly to the AF, or may be sent by the PCF to the AF via the NEF.

In combination with the embodiments of FIG. 8 and FIG. 9, as shown in FIG. 10, the embodiment provides an information transmission method, which may be performed by an AF and includes the following steps.

At step 1001, a transmission latency parameter of a bidirectional transmission of a predetermined service is sent to a PCF, in which the transmission latency parameter of the bidirectional transmission is used for the PCF to determine a correlation ID of the predetermined service, which is used to correlate a transmission latency parameter of an uplink transmission of a data flow of the predetermined service with a transmission latency parameter of a downlink transmission of the data flow of the predetermined service.

At step 1002, a QoS latency monitoring report of an uplink transmission and a QoS latency monitoring report of a downlink transmission sent by the PCF or a UPF are received.

The embodiment of FIG. 10 includes contents of the embodiment of FIG. 8 and the embodiment of FIG. 9. Therefore, the same explanations or features are not repeated one by one, and reference may be made to the embodiments of the corresponding side.

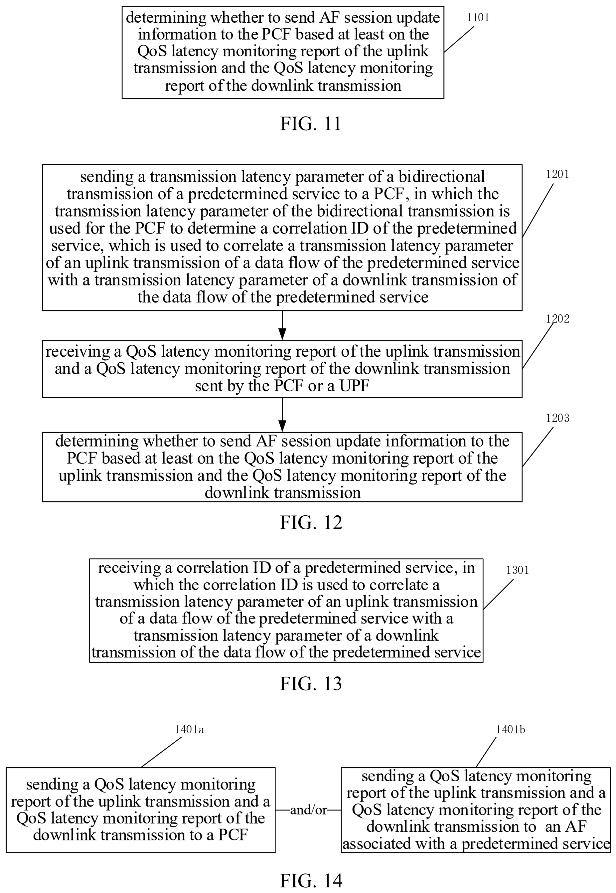

As shown in FIG. 11, the embodiment provides an information transmission method, which may be performed by an AF and includes the following steps.

At step 1101, it is determined whether to send AF session update information to a PCF based at least on a QoS latency monitoring report of an uplink transmission and a QoS latency monitoring report of a downlink transmission.

In an embodiment, the AF session update information is used for the PCF to update a PCC rule of the uplink transmission of a predetermined service and/or a PCC rule of the downlink transmission of the predetermined service.

In a possible implementation, an AF session request may include: information such as data flow description and QoS characteristic of the data flow, etc. The PCF may generate or update the PCC rule for the corresponding data flow according to the information such as data flow description and QoS characteristic of the data flow.

The UPF and/or the access network device may monitor a transmission latency parameter of the uplink transmission and/or a transmission latency parameter of the downlink transmission, and send the QoS latency monitoring report of the uplink transmission and the QoS latency monitoring report of the downlink transmission to the PCF or the AF, so that the PCF adjusts the PCC rule of the uplink transmission and/or the PCC rule of the downlink transmission based on the received QoS latency monitoring reports, to enable transmission of the data flow to adapt to the current network condition; or the AF determines whether to send the AF session update information to the PCF, so that the PCF adjusts the PCC rule of the uplink transmission and/or the PCC rule of the downlink transmission, to enable transmission of the data flow to adapt to the current network condition.

In a possible implementation, the QoS latency monitoring report of the uplink transmission and the QoS latency monitoring report of the downlink transmission sent by the UPF to the AF may be obtained by the UPF in monitoring and sent to the AF, or may be obtained by the access network device in monitoring and sent to the AF via the UPF.

In a possible implementation, the PCF does not directly determine whether to update the PCC rule of the uplink transmission and/or the PCC rule of the downlink transmission. The PCF may send the received QoS latency monitoring report of the uplink transmission and the received QoS latency monitoring report of the downlink transmission to the AF.

After receiving the QoS latency monitoring report of the uplink transmission and the QoS latency monitoring report of the downlink transmission, the AF may determine whether to send the AF session update information, so that the PCF updates the PCC rule of the uplink transmission and/or the PCC rule of the downlink transmission.

In a possible implementation, the AF session update information includes a transmission latency parameter of a bidirectional transmission of a data flow of the predetermined service.

In a possible implementation, the QoS latency monitoring report of the uplink transmission and the QoS latency monitoring report of the downlink transmission are used to trigger modification of an AF session of the predetermined service, and further trigger update of the PCC rule.

For example, the AF may determine whether it is required to provide the transmission latency parameter of the bidirectional transmission to the PCF based on the QoS latency monitoring report of the uplink transmission and the QoS latency monitoring report of the downlink transmission, so that the PCF may update the PCC rule of the uplink transmission and/or the PCC rule of the downlink transmission of the service.

The PCF may update the PCC rule of the uplink transmission and/or the PCC rule of the downlink transmission of the service according to the AF session update information.

The AF may provide the AF session update information to the PCF, so that the PCF may determine the PCC rule of the uplink transmission and/or the PCC rule of the downlink transmission, that is, update the transmission latency parameter of the uplink transmission and/or the transmission latency parameter of the uplink transmission.

The AF may send the AF session update information to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

In an embodiment, sending the transmission latency parameter of the bidirectional transmission of the predetermined service to the PCF includes at least one of:
sending the transmission latency parameter of the bidirectional transmission of the predetermined service to the PCF via an NEF;
sending the transmission latency parameter of the bidirectional transmission of the predetermined service to the PCF via a TSCTSF; or
sending the transmission latency parameter of the bidirectional transmission of the predetermined service to the PCF via an NEF and a TSCTSF.

When the AF provides a bidirectional transmission latency requirement (the transmission latency parameter of the bidirectional transmission of the predetermined service) to the PCF, the AF may directly or indirectly send it to the AF. The indirectly sending includes:
1) sending to the PCF via an NEF;
2) sending to the PCF via a TSCTSF; or
3) sending to the PCF via a TSCTSF and an NEF.

In a possible implementation, the QoS latency monitoring report of the uplink transmission and the QoS latency monitoring report of the downlink transmission may be sent by the UPF to the AF through a user plane notification procedure from the UPF to the AF.

Here, the UPF may report the QoS latency monitoring report of the uplink transmission and the QoS latency monitoring report of the downlink transmission to the AF.

The UPF and/or the access network device determines to report the QoS latency monitoring report of the uplink transmission and the QoS latency monitoring report of the downlink transmission in a similar manner described above, which will be not repeated here.

In a possible implementation, the QoS latency monitoring report of the uplink transmission and the QoS latency monitoring report of the downlink transmission are used to trigger modification of an AF session associated with the predetermined service, and further trigger update of the PCC rule.

After receiving the QoS latency monitoring report of the uplink transmission and the QoS latency monitoring report of the downlink transmission, the AF may determine whether to send the AF session update information for the PCF to update the PCC rule of the uplink transmission and/or the PCC rule of the downlink transmission.

In a possible implementation, the AF session update information includes one of the following:
a transmission latency parameter of a bidirectional transmission of a data flow of a predetermined service; or
a QoS latency monitoring report of the uplink transmission and a QoS latency monitoring report of the downlink transmission.

For example, the AF may determine whether it is required to provide the transmission latency parameter of the bidirectional transmission to the PCF based on the QoS latency monitoring report of the uplink transmission and the QoS latency monitoring report of the downlink transmission, so that the PCF may update the PCC rule of the uplink transmission and/or the PCC rule of the downlink transmission of the service.

The PCF may update the PCC rule of the uplink transmission and/or the PCC rule of the downlink transmission of the service based on the AF session update information.

The AF sends the AF session update information to the PCF in a similar manner as described above, which will not be described in detail here.

In a possible implementation, the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets an uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a downlink subscribe event triggering condition, and determining the QoS latency monitoring report of the uplink transmission through the correlation ID.

For example, when the UPF monitors that the transmission latency parameter of the uplink transmission meets the uplink subscribe event triggering condition, it may send a latency monitoring report to the PCF and/or an AF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the UPF monitors that the transmission latency parameter of the downlink transmission meets the downlink subscribe event triggering condition, it may send a latency monitoring report to the PCF and/or an AF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the uplink transmission meets the uplink subscribe event triggering condition, it may send a latency monitoring report to the PCF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the downlink transmission meets the downlink subscribe event triggering condition, it may send a latency monitoring report to the PCF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

In an embodiment, the AF session update information is used for the PCF to update a PDB parameter and/or a PSDB parameter in the PCC rule of the uplink transmission of the predetermined service, and/or update a PDB parameter and/or a PSDB parameter in the PCC rule of the downlink transmission of the predetermined service.

In a possible implementation, the PCF may adjust the PDB parameter and/or the PSDB parameter of the uplink transmission and/or adjust the PDB parameter and/or the PSDB parameter of the downlink transmission based on the AF session update information.

In a possible implementation, updating the PCC rule of the uplink transmission of the predetermined service includes: updating the 5QI in the PCC rule of the uplink transmission of the predetermined service.

In a possible implementation, updating the PCC rule of the downlink transmission of the predetermined service includes: updating the 5QI in the PCC rule of the downlink transmission of the predetermined service.

For example, based on the AF session update information, the PCF may authorize a new PDB parameter for the uplink transmission and/or a new PDB parameter for the downlink transmission (for example, a new 5QI corresponding to the PDBPDB may be selected).

The sequence of steps listed in the above embodiment of the information transmission method on the AF side is not used to limit the execution sequence of each step. Each step may be executed in the sequence listed in each step, or may be executed in other sequences without contradiction. Each step may be implemented as a separate embodiment if there is no contradiction, or multiple steps may be combined together as an embodiment.

In combination with the embodiments of FIG. 8, FIG. 9 and FIG. 11, as shown in FIG. 12, an embodiment provides an information transmission method, which may be performed by an AF and includes the following steps.

At step 1201, a transmission latency parameter of a bidirectional transmission of a predetermined service is sent to a PCF, in which the transmission latency parameter of the bidirectional transmission is used for the PCF to determine a correlation ID of the predetermined service, which is used to correlate a transmission latency parameter of an uplink transmission of a data flow of the predetermined service with a transmission latency parameter of a downlink transmission of the data flow of the predetermined service.

At step 1202, a QoS latency monitoring report of the uplink transmission and a QoS latency monitoring report of the downlink transmission sent by the PCF or a UPF are received.

At step 1203, it is determined whether to send AF session update information to the PCF based at least on the QoS latency monitoring report of the uplink transmission and the QoS latency monitoring report of the downlink transmission.

The embodiment of FIG. 11 includes contents of the embodiment of FIG. 8, the embodiment of FIG. 9, and the embodiment of FIG. 10. Therefore, the same explanations or features are not repeated one by one, and reference may be made to the embodiments of the corresponding side.

In each embodiment, the information transmission methods performed on the PCF side, the UPF side, the AF side and the access network side may correspond one to one, so the same explanations or features will not be repeated one by one, and reference may be made to the embodiments of the corresponding side.

As shown in FIG. 13, an embodiment provides an information transmission method, which may be performed by a UPF and includes the following steps.

At step 1301, a correlation ID of a predetermined service is received. The correlation ID is used to correlate a transmission latency parameter of an uplink transmission of a data flow of the predetermined service with a transmission latency parameter of a downlink transmission of the data flow of the predetermined service.

The predetermined service includes, but is not limited to, an XRM service.

In a possible implementation, receiving the correlation ID of the predetermined service includes at least one of:
receiving the correlation ID of the predetermined service directly; or
receiving the correlation ID of the predetermined service indirectly.

In a possible implementation, receiving the correlation ID of the predetermined service directly includes receiving the correlation ID of the predetermined service directly from a PCG.

In a possible implementation, sending the correlation ID of the predetermined service indirectly includes receiving the correlation ID of the predetermined service sent by the PCT via an SMF.

In a possible implementation, the predetermined service may have a bidirectional transmitted data flow.

In a possible implementation, the correlation ID may include at least one of: a correlation ID, a peer ID, a bidirectional transmission group ID (also called round trip group ID), a peer indication, or a common ID. The name of the correlation ID is not limited herein.

In a possible implementation, the correlation ID may be generated based on the common ID, or the correlation ID may be generated by mapping based on the common ID.

In a possible implementation, the correlation ID is correlated with the transmission latency parameter of the uplink transmission of the data flow of the predetermined service, and is correlated with the transmission latency parameter of the downlink transmission of the data flow of the predetermined service. That is, a core network node or an access network device may determine the transmission latency parameter of the uplink transmission of the data flow of the predetermined service and the transmission latency parameter of the downlink transmission of the data flow of the predetermined service through the correlation ID.

The transmission latency parameter may include, but is not limited to, a latency configuration parameter associated with transmission of the data flow.

The transmission latency parameter may include at least one of: transmission latency, data packet delay budget (PDB), or data packet set delay budget (PSDB). The PDB and/or the PSDB may belong to 5QI (5G QoS identifier). The PSDB defines an upper limit of the transmission latency of a PDU set between a UE and an N6 termination point at a UPF.

In a possible implementation, the PCF may determine the transmission latency of the uplink transmission of the data flow and/or the transmission latency of the downlink transmission of the data flow based on a transmission latency parameter of the bidirectional transmission of the data flow of the predetermined service. The transmission latency parameter of the bidirectional transmission of the data flow of the predetermined service may be indicated by an AF associated with the predetermined service to the PCF.

In a possible implementation, the AF may send the transmission latency parameter of the bidirectional transmission of the data flow of the predetermined service to the PCF via an NEF.

In a possible implementation, the transmission latency parameter of the bidirectional transmission may represent an allowed maximum transmission latency of the data flow of the predetermined service during the uplink transmission and the downlink transmission.

In a possible implementation, a sum of the transmission latency of the uplink transmission of the data flow and the transmission latency of the uplink transmission of the data flow is less than or equal to a transmission latency of the bidirectional transmission of the data flow of the predetermined service.

In a possible implementation, the correlation ID is correlated with at least one of:
a transmission latency parameter of an uplink service data flow of the predetermined service;
a transmission latency parameter of a downlink service data flow of the predetermined service;
a transmission latency parameter of a QoS flow of the predetermined service;
a policy and charging control (PCC) associated with the predetermined service; or
5QI associated with the predetermined service.

In a possible implementation, the PCF may generate the correlation ID based on a predetermined determination strategy.

In a possible implementation, one correlation ID may be associated with one predetermined service, or one correlation ID may be associated with one type of predetermined services.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In a possible implementation, a requirement of the predetermined service for the transmission latency parameter may include at least one of: a requirement of the predetermined service for the transmission latency parameter of the bidirectional transmission of the data flow; a requirement of the predetermined service for the transmission latency parameter of the uplink transmission of the data flow; or a requirement of the predetermined service for the transmission latency parameter of the downlink transmission of the data flow.

In a possible implementation, the PCF may determine that the network supports a bidirectional transmission latency rule or 5QI update for the predetermined service based on the transmission latency parameter of the bidirectional transmission of the predetermined service (i.e., the requirement for the transmission latency parameter), the subscription information, or the operator policy, and then generate the correlation ID.

In a possible implementation, the correlation ID may be determined based on one or more of the transmission latency parameter of the bidirectional transmission, the subscription information associated with the predetermined service, or the operator policy associated with the predetermined service.

For example, the correlation ID may be allocated based on the operator policy, which includes a rule for allocating the correlation ID.

In the related art, the uplink transmission and the downlink transmission of the data flow of the predetermined service are independent from each other, and the transmission latency parameter of the uplink transmission and the transmission latency parameter of the downlink transmission are not associated with each other, so it is impossible to achieve coordinated adjustment of the transmission latency parameter of the uplink transmission and the transmission latency parameter of the downlink transmission.

The correlation ID is used to correlate the transmission latency parameter of the uplink transmission and the transmission latency parameter of the downlink transmission. A core network element and/or an access network device may determine the transmission latency parameter of the uplink transmission and the transmission latency parameter of the downlink transmission based on the correlation ID, and perform coordinated processing on the transmission latency parameter of the uplink transmission and the transmission latency parameter of the downlink transmission, thereby improving a coordinative efficiency of the transmission latency parameter of the uplink transmission and the transmission latency parameter of the uplink transmission, and further meeting a bidirectional transmission latency requirement of the predetermined service and improving a success transmission rate of the predetermined service.

In an embodiment, the correlation ID is indicated by a PCC rule associated with the predetermined service sent by the PCF to the SMF.

In a possible implementation, the correlation ID may be carried in the PCC rule.

In a possible implementation, the PCC rule may carry index information of the correlation ID, and the index information is used to retrieve the correlation ID in an index table of the correlation ID.

In a possible implementation, the PCC rule includes at least one of: a PCC rule of the uplink transmission, or a PCC rule of the downlink transmission.

For example, when the PCF sends the PCC rule to the SMF, it may simultaneously send a correlation ID for correlating the transmission latency parameter of the uplink transmission and/or the transmission latency parameter of the downlink transmission, and the SMF may send the correlation ID to a RAN and a UPF.

In a possible implementation, the PCF may carry the correlation ID in the PCC rule and send it to the SMF, and the SMF may take out the correlation ID and send it to an access network device and/or a UPF.

In a possible implementation, the PCF may add a new field in the PCC rule to carry the correlation ID.

In a possible implementation, the PCF may carry it in an existing field within the PCC rule, such as a service data flow template, or a 5G QoS identifier.

In a possible implementation, the PCF may separately send the correlation ID to the SMF, and the SMF may send it to an access network device and/or a UPF.

As shown in FIG. 14, an embodiment provides an information transmission method, which may be performed by a UPF and includes the following steps.

At step 1401a, a QoS latency monitoring report of an uplink transmission and a QoS latency monitoring report of a downlink transmission are sent to a PCF.

At step 1401b, a QoS latency monitoring report of an uplink transmission and a QoS latency monitoring report of a downlink transmission are sent to an AF associated with a predetermined service.

The QoS latency monitoring report of the uplink transmission and the QoS latency monitoring report of the downlink transmission are correlated using a correlation ID.

In a possible implementation, the QoS latency monitoring report of the uplink transmission and the QoS latency monitoring report of the downlink transmission sent to the PCF are used for the PCF to update a PCC rule of the uplink transmission of the predetermined service and/or a PCC rule of the downlink transmission of the predetermined service.

In a possible implementation, the QoS latency monitoring report of the uplink transmission and the QoS latency monitoring report of the downlink transmission sent to the AF are used for the AF to determine whether to send AF session update information to the PCF, so that the PCF updates a PCC rule of the uplink transmission of the predetermined service and/or a PCC rule of the downlink transmission of the predetermined service.

The UPF may monitor the transmission latency parameter of the uplink transmission and/or the transmission latency parameter of the downlink transmission, and send the QoS latency monitoring report of the uplink transmission and the QoS latency monitoring report of the downlink transmission to the PCF. The PCF adjusts the PCC rule of the uplink transmission and/or the PCC rule of the downlink transmission based on the received QoS latency monitoring reports, so that transmission of the data flow may adapt to the current network condition.

In a possible implementation, the QoS latency monitoring report of the uplink transmission may be used to indicate the transmission latency parameter of the current uplink transmission, and the QoS latency monitoring report of the downlink transmission may be used to indicate the transmission latency parameter of the current downlink transmission.

In a possible implementation, updating the PCC rule of the uplink transmission of the predetermined service and/or the PCC rule of the downlink transmission of the predetermined service includes at least one of:
adjusting the PCC rule of the uplink transmission and/or the PCC rule of the downlink transmission; or
creating a new PCC rule for the uplink transmission and/or a new PCC rule for the downlink transmission.

For example, the PCF may update the PCC rule of the uplink transmission of the predetermined service and/or the PCC rule of the downlink transmission of the predetermined service, so that a sum of an uplink transmission latency of the data flow and the uplink transmission latency of the data flow is less than or equal to a bidirectional transmission latency requirement of the data flow.

Here, the QoS latency monitoring report of the uplink transmission and the QoS latency monitoring report of the downlink transmission may be sent by the UPF to the AF through a user plane notification procedure from the UPF to the AF.

Here, the UPF may report the QoS latency monitoring report of the uplink transmission and the QoS latency monitoring report of the downlink transmission to the AF.

The UPF and/or the access network device determines to report the QoS latency monitoring report of the uplink transmission and the QoS latency monitoring report of the downlink transmission in a similar manner described above, which will be not repeated here.

In a possible implementation, the QoS latency monitoring report of the uplink transmission and the QoS latency monitoring report of the downlink transmission are used to trigger modification of an AF session associated with the predetermined service, and further trigger update of the PCC rule.

After receiving the QoS latency monitoring report of the uplink transmission and the QoS latency monitoring report of the downlink transmission, the AF may determine whether to send the AF session update information for the PCF to update the PCC rule of the uplink transmission and/or the PCC rule of the downlink transmission.

Here, the QoS latency monitoring report of the uplink transmission and the QoS latency monitoring report of the downlink transmission sent by the UPF may be sent by the UPF to the AF directly, or may be sent by the UPF to the AF via the NEF.

In a possible implementation, the AF session update information includes one of the following:
a transmission latency parameter of a bidirectional transmission of a data flow of a predetermined service; or
a QoS latency monitoring report of the uplink transmission and a QoS latency monitoring report of the downlink transmission.

For example, the AF may determine whether it is required to provide the transmission latency parameter of the bidirectional transmission to the PCF based on the QoS latency monitoring report of the uplink transmission and the QoS latency monitoring report of the downlink transmission, so that the PCF may update the PCC rule of the uplink transmission and/or the PCC rule of the downlink transmission of the service.

The PCF may update the PCC rule of the uplink transmission and/or the PCC rule of the downlink transmission of the service based on the AF session update information.

The AF may provide the AF session update information to the PCF, for the PCF to determine the PCC rule of the uplink transmission and/or the PCC rule of the downlink transmission, i.e., updating the transmission latency parameter of the uplink transmission and/or the transmission latency parameter of the uplink transmission.

The AF may send the AF session update information to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a TSCTSF; or
3) sending to the PCF via a TSCTSF and an NEF.

In a possible implementation, the QoS latency monitoring report of the uplink transmission and the QoS latency monitoring report of the downlink transmission sent by the UPF to the PCF may be obtained by the UPF in monitoring and sent to the PCF, or may be obtained by the access network device in monitoring and sent to the PCF via the UPF.

In a possible implementation, the QoS latency monitoring report of the uplink transmission and the QoS latency monitoring report of the downlink transmission sent by the UPF to the AF may be obtained by the UPF in monitoring and sent to the AF, or may be obtained by the access network device in monitoring and sent to the AF via the UPF.

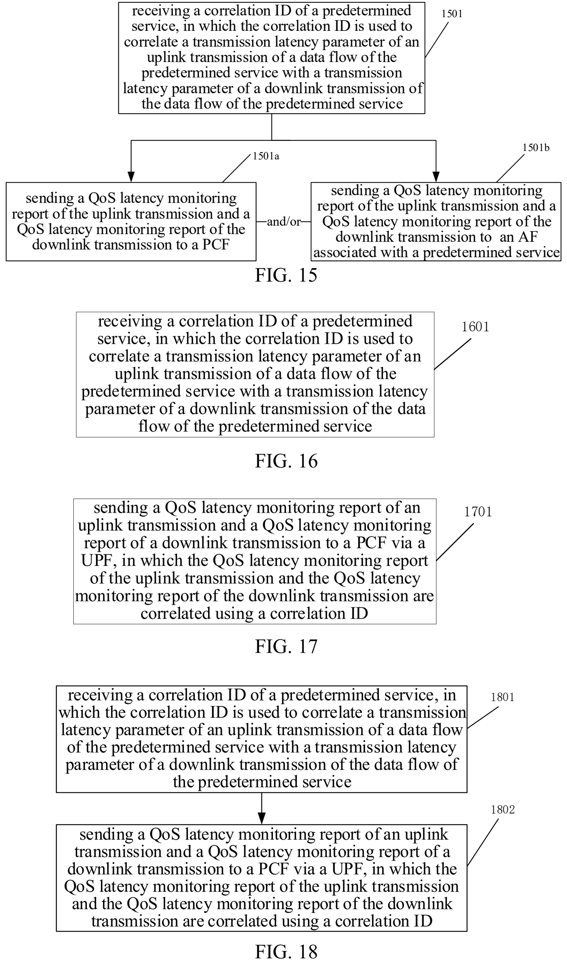

In combination with the embodiments of FIG. 13 and FIG. 14, as shown in FIG. 15, an embodiment provides an information transmission method, which may be performed by a UPF and includes the following steps.

At step 1501, a correlation ID of a predetermined service is received. The correlation ID is used to correlate a transmission latency parameter of an uplink transmission of a data flow of the predetermined service with a transmission latency parameter of a downlink transmission of the data flow of the predetermined service.

The method further includes at least one of the following steps.

At step 1501a, a QoS latency monitoring report of the uplink transmission and a QoS latency monitoring report of the downlink transmission are sent to a PCF.

At step 1501b, a QoS latency monitoring report of the uplink transmission and a QoS latency monitoring report of the downlink transmission are sent to an AF associated with a predetermined service.

The embodiment of FIG. 15 includes contents of the embodiment of FIG. 13 and the embodiment of FIG. 14. Therefore, the same explanations or features are not repeated one by one, and reference may be made to the embodiments of the corresponding side.

In an embodiment, the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets a first uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a first subscribe event triggering condition, and determining the QoS latency monitoring report of the uplink transmission through the correlation ID.

For example, when the UPF monitors that the transmission latency parameter of the uplink transmission meets the uplink subscribe event triggering condition, it may send a latency monitoring report to the PCF and/or an AF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the UPF monitors that the transmission latency parameter of the downlink transmission meets the downlink subscribe event triggering condition, it may send a latency monitoring report to the PCF and/or an AF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the uplink transmission meets the uplink subscribe event triggering condition, it may send a latency monitoring report to the PCF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the downlink transmission meets the downlink subscribe event triggering condition, it may send a latency monitoring report to the PCF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

In a possible implementation, the uplink subscribe event adopted by the UPF and the uplink subscribe event adopted by the access network device may be the same or different, which are not limited here.

In a possible implementation, the downlink subscribe event adopted by the UPF and the downlink subscribe event adopted by the access network device may be the same or different, which are not limited here.

In an embodiment, updating the PCC rule of the uplink transmission of the predetermined service includes: updating a PDB parameter and/or a PSDB parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

In a possible implementation, the PCF may adjust the PDB parameter and/or the PSDB parameter of the uplink transmission and/or adjust the PDB parameter and/or the PSDB parameter of the downlink transmission based on the AF session update information.

In a possible implementation, updating the PCC rule of the uplink transmission of the predetermined service includes: updating the 5QI in the PCC rule of the uplink transmission of the predetermined service.

In a possible implementation, updating the PCC rule of the downlink transmission of the predetermined service includes: updating the 5QI in the PCC rule of the downlink transmission of the predetermined service.

For example, based on the AF session update information, the PCF may authorize a new PDB parameter for the uplink transmission and/or a new PDB parameter for the downlink transmission (for example, a new 5QI corresponding to the PDB may be selected).

The sequence of steps listed in the above embodiment of the information transmission method on the AF side is not used to limit the execution sequence of each step. Each step may be executed in the sequence listed in each step, or may be executed in other sequences without contradiction. Each step may be implemented as a separate embodiment if there is no contradiction, or multiple steps may be combined together as an embodiment.

In each embodiment, the information transmission methods performed on the PCF side, the UPF side, the AF side and the access network side may correspond one to one, so the same explanations or features will not be repeated one by one, and reference may be made to the embodiments of the corresponding side.

As shown in FIG. 16, an embodiment provides an information transmission method, which may be performed by an access network device and includes the following steps.

At step 1601, a correlation ID of a predetermined service is received. The correlation ID is used to correlate a transmission latency parameter of an uplink transmission of a data flow of the predetermined service with a transmission latency parameter of a downlink transmission of the data flow of the predetermined service.

The predetermined service includes, but is not limited to, an XRM service.

In a possible implementation, receiving the correlation ID of the predetermined service includes at least one of:
receiving the correlation ID of the predetermined service directly; or
receiving the correlation ID of the predetermined service indirectly.

In a possible implementation, receiving the correlation ID of the predetermined service directly includes receiving the correlation ID of the predetermined service directly from a PCG.

In a possible implementation, sending the correlation ID of the predetermined service indirectly includes receiving the correlation ID of the predetermined service sent by the PCT via an SMF.

In a possible implementation, the predetermined service may have a bidirectional transmitted data flow.

In a possible implementation, the correlation ID may include at least one of: a correlation ID, a peer ID, a bidirectional transmission group ID (also called round trip group ID), a peer indication, or a common ID. The name of the correlation ID is not limited herein.

In a possible implementation, the correlation ID may be generated based on the common ID, or the correlation ID may be generated by mapping based on the common ID.

In a possible implementation, the correlation ID is correlated with the transmission latency parameter of the uplink transmission of the data flow of the predetermined service, and is correlated with the transmission latency parameter of the downlink transmission of the data flow of the predetermined service. That is, a core network node or an access network device may determine the transmission latency parameter of the uplink transmission of the data flow of the predetermined service and the transmission latency parameter of the downlink transmission of the data flow of the predetermined service through the correlation ID.

The transmission latency parameter may include, but is not limited to, a latency configuration parameter associated with transmission of the data flow.

The transmission latency parameter may include at least one of: transmission latency, data packet delay budget (PDB), or data packet set delay budget (PSDB). The PDB and/or the PSDB may belong to 5QI (5G QoS identifier). The PSDB defines an upper limit of the transmission latency of a PDU set between a UE and an N6 termination point at a UPF.

In a possible implementation, the PCF may determine the transmission latency of the uplink transmission of the data flow and/or the transmission latency of the downlink transmission of the data flow based on a transmission latency parameter of the bidirectional transmission of the data flow of the predetermined service. The transmission latency parameter of the bidirectional transmission of the data flow of the predetermined service may be indicated by an AF associated with the predetermined service to the PCF.

In a possible implementation, the AF may send the transmission latency parameter of the bidirectional transmission of the data flow of the predetermined service to the PCF via an NEF.

In a possible implementation, the transmission latency parameter of the bidirectional transmission may represent an allowed maximum transmission latency of the data flow of the predetermined service during the uplink transmission and the downlink transmission.

In a possible implementation, a sum of the transmission latency of the uplink transmission of the data flow and the transmission latency of the uplink transmission of the data flow is less than or equal to a transmission latency of the bidirectional transmission of the data flow of the predetermined service.

In a possible implementation, the correlation ID is correlated with at least one of:
a transmission latency parameter of an uplink service data flow of the predetermined service;
a transmission latency parameter of a downlink service data flow of the predetermined service;
a transmission latency parameter of a QoS flow of the predetermined service;
a policy and charging control (PCC) associated with the predetermined service; or
5QI associated with the predetermined service.

In a possible implementation, the PCF may generate the correlation ID based on a predetermined determination strategy.

In a possible implementation, one correlation ID may be associated with one predetermined service, or one correlation ID may be associated with one type of predetermined services.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In a possible implementation, a requirement of the predetermined service for the transmission latency parameter may include at least one of: a requirement of the predetermined service for the transmission latency parameter of the bidirectional transmission of the data flow; a requirement of the predetermined service for the transmission latency parameter of the uplink transmission of the data flow; or a requirement of the predetermined service for the transmission latency parameter of the downlink transmission of the data flow.

In a possible implementation, the PCF may determine that the network supports a bidirectional transmission latency rule or 5QI update for the predetermined service based on the transmission latency parameter of the bidirectional transmission of the predetermined service (i.e., the requirement for the transmission latency parameter), the subscription information, or the operator policy, and then generate the correlation ID.

In a possible implementation, the correlation ID may be determined based on one or more of the transmission latency parameter of the bidirectional transmission, the subscription information associated with the predetermined service, or the operator policy associated with the predetermined service.

For example, the correlation ID may be allocated based on the operator policy, which includes a rule for allocating the correlation ID.

In the related art, the uplink transmission and the downlink transmission of the data flow of the predetermined service are independent from each other, and the transmission latency parameter of the uplink transmission and the transmission latency parameter of the downlink transmission are not associated with each other, so it is impossible to achieve coordinated adjustment of the transmission latency parameter of the uplink transmission and the transmission latency parameter of the downlink transmission.

The correlation ID is used to correlate the transmission latency parameter of the uplink transmission and the transmission latency parameter of the downlink transmission. A core network element and/or an access network device may determine the transmission latency parameter of the uplink transmission and the transmission latency parameter of the downlink transmission based on the correlation ID, and perform coordinated processing on the transmission latency parameter of the uplink transmission and the transmission latency parameter of the downlink transmission, thereby improving a coordinative efficiency of the transmission latency parameter of the uplink transmission and the transmission latency parameter of the uplink transmission, and further meeting a bidirectional transmission latency requirement of the predetermined service and improving a success transmission rate of the predetermined service.

In an embodiment, the correlation ID is indicated by a PCC rule associated with the predetermined service sent by the PCF to the SMF.

In a possible implementation, the correlation ID may be carried in the PCC rule.

In a possible implementation, the PCC rule may carry index information of the correlation ID, and the index information is used to retrieve the correlation ID in an index table of the correlation ID.

In a possible implementation, the PCC rule includes at least one of: a PCC rule of the uplink transmission, or a PCC rule of the downlink transmission.

For example, when the PCF sends the PCC rule to the SMF, it may simultaneously send a correlation ID for correlating the transmission latency parameter of the uplink transmission and/or the transmission latency parameter of the downlink transmission, and the SMF may send the correlation ID to a RAN and a UPF.

In a possible implementation, the PCF may carry the correlation ID in the PCC rule and send it to the SMF, and the SMF may take out the correlation ID and send it to an access network device and/or a UPF.

In a possible implementation, the PCF may add a new field in the PCC rule to carry the correlation ID.

In a possible implementation, the PCF may carry it in an existing field within the PCC rule, such as a service data flow template, or a 5G QoS identifier.

In a possible implementation, the PCF may separately send the correlation ID to the SMF, and the SMF may send it to an access network device and/or a UPF.

As shown in FIG. 17, an embodiment provides an information transmission method, which may be performed by an access network device and includes the following steps.

At step 1701, a QoS latency monitoring report of an uplink transmission and a QoS latency monitoring report of a downlink transmission are sent to a PCF via a UPF, in which the QoS latency monitoring report of the uplink transmission and the QoS latency monitoring report of the downlink transmission are correlated using a correlation ID.

In a possible implementation, the QoS latency monitoring report of the uplink transmission and the QoS latency monitoring report of the downlink transmission are used for the PCF to update a PCC rule of the uplink transmission a the predetermined service and/or a PCC rule of the downlink transmission of the predetermined service.

The access network device may monitor a transmission latency parameter of the uplink transmission and/or a transmission latency parameter of the downlink transmission, and send the QoS latency monitoring report of the uplink transmission and the QoS latency monitoring report of the downlink transmission to the PCF, so that the PCF adjusts the PCC rule of the uplink transmission and/or the PCC rule of the downlink transmission based on the received QoS latency monitoring reports, to enable transmission of the data flow to adapt to the current network condition.

In a possible implementation, the QoS latency monitoring report of the uplink transmission may be used to indicate the transmission latency parameter of the current uplink transmission, and the QoS latency monitoring report of the downlink transmission may be used to indicate the transmission latency parameter of the current downlink transmission.

In a possible implementation, updating the PCC rule of the uplink transmission of the predetermined service and/or the PCC rule of the downlink transmission of the predetermined service includes at least one of:
adjusting the PCC rule of the uplink transmission and/or the PCC rule of the downlink transmission; or
creating a new PCC rule for the uplink transmission and/or a new PCC rule for the downlink transmission.

For example, the PCF may update the PCC rule of the uplink transmission of the predetermined service and/or the PCC rule of the downlink transmission of the predetermined service, so that a sum of an uplink transmission latency of the data flow and the uplink transmission latency of the data flow is less than or equal to a bidirectional transmission latency requirement of the data flow.

In an embodiment, the QoS latency monitoring report of the uplink transmission and the QoS latency monitoring report of the downlink transmission are sent by an access network device in case of monitoring the transmission latency parameter of the uplink transmission, determining that the transmission latency parameter of the uplink transmission meets a second uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the access network device in case of monitoring the transmission latency parameter of the downlink transmission, determining that the transmission latency parameter of the downlink transmission meets a second downlink subscribe event triggering condition, and determining the QoS latency monitoring report of the uplink transmission through the correlation ID.

For example, when the access network device monitors that the transmission latency parameter of the uplink transmission meets the uplink subscribe event triggering condition, it may send a latency monitoring report to the PCF. The UPF may carry the monitored transmission latency parameter of the uplink transmission in the QoS latency monitoring report of the uplink transmission. The UPF may also determine, based on the correlation ID of the QoS latency monitoring report of the uplink transmission, the QoS latency monitoring report of the downlink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

For example, when the access network device monitors that the transmission latency parameter of the downlink transmission meets the downlink subscribe event triggering condition, it may send a latency monitoring report to the PCF. The UPF may carry the monitored transmission latency parameter of the downlink transmission in the QoS latency monitoring report of the downlink transmission. The UPF may also determine, based on the correlation ID of the QoS latency monitoring report of the downlink transmission, the QoS latency monitoring report of the uplink transmission corresponding to the correlation ID. The UPF may send the QoS latency monitoring report of the uplink transmission and the QoS latency monitoring report of the downlink transmission to the PCF and/or the AF, thereby triggering the PCF to update the PCC rule of the uplink transmission and/or the PCC rule of the downlink transmission of the predetermined service. For example, the PCF is triggered to authorize a new PDB parameter for the uplink transmission and/or a PDB parameter for the downlink transmission.

In an embodiment, updating the PCC rule of the uplink transmission of the predetermined service includes: updating a PDB parameter and/or a PSDB parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

Updating the PCC rule of the downlink transmission of the predetermined service includes: updating a PDB parameter and/or a PSDB parameter in the PCC rule of the downlink transmission of the predetermined service.

In a possible implementation, the PCF may adjust the PDB parameter and/or the PSDB parameter of the uplink transmission and/or adjust the PDB parameter and/or the PSDB parameter of the downlink transmission based on the AF session update information.

In a possible implementation, updating the PCC rule of the uplink transmission of the predetermined service includes: updating the 5QI in the PCC rule of the uplink transmission of the predetermined service.

In a possible implementation, updating the PCC rule of the downlink transmission of the predetermined service includes: updating the 5QI in the PCC rule of the downlink transmission of the predetermined service.

For example, based on the AF session update information, the PCF may authorize a new PDB parameter for the uplink transmission and/or a new PDB parameter for the downlink transmission (for example, a new 5QI corresponding to the PDBPDB may be selected).

In combination with the embodiments of FIG. 16 and FIG. 17, as shown in FIG. 18, an embodiment provides an information transmission method, which may be performed by an access network device and includes the following steps.

At step 1801, a correlation ID of a predetermined service is received. The correlation ID is used to correlate a transmission latency parameter of an uplink transmission of a data flow of the predetermined service with a transmission latency parameter of a downlink transmission of the data flow of the predetermined service.

At step 1802, a QoS latency monitoring report of an uplink transmission and a QoS latency monitoring report of a downlink transmission are sent to a PCF via a UPF, in which the QoS latency monitoring report of the uplink transmission and the QoS latency monitoring report of the downlink transmission are correlated using a correlation ID.

The embodiment of FIG. 18 includes contents of the embodiment of FIG. 16 and the embodiment of FIG. 17. Therefore, the same explanations or features are not repeated one by one, and reference may be made to the embodiments of the corresponding side.

The sequence of steps listed in the above embodiment of the information transmission method on the access network device side is not used to limit the execution sequence of each step. Each step may be executed in the sequence listed in each step, or may be executed in other sequences without contradiction. Each step may be implemented as a separate embodiment if there is no contradiction, or multiple steps may be combined together as an embodiment.

In each embodiment, the information transmission methods performed on the PCF side, the UPF side, the AF side and the access network side may correspond one to one, so the same explanations or features will not be repeated one by one, and reference may be made to the embodiments of the corresponding side.

A specific example is provided below in combination with any of the above embodiments.

The PCF adds a round trip (RT) (also called bidirectional transmission) correlation ID for the uplink data flow and the downlink data flow of XRM services. The correlation ID may include one of the following: peer ID; round trip group ID; peer indication; common ID. The correlation ID is used to correlate the uplink and downlink service data flows (SDFs)/ QoS flows/ PCC rules/5QIs (such as PDB), i.e., transmission latency parameters, of the RT. When the PCF sends the PCC rules to an SMF, it also sends the correlation ID of the RT; the SMF sends the correlation ID to a RAN and a UPF; when the RAN and the UPF send downlink (DL)/uplink (UL) latency QoS monitoring notification, they also send the UL/DL latency identified by the correlation ID to the PCF/AF.

Optionally, the PCF divides the bidirectional transmission latency into an uplink PDB and a downlink PDB, generates two PCC rules corresponding to the uplink SDF and the downlink SDF, and allocates corresponding 5QIs to the two rules considering the corresponding PDBs. The two PCC rules are respectively associated with the QoS monitoring policy to monitor an uplink latency and a downlink latency.

Optionally, when the PCF sends the PCC rules to the SMF, it also sends the correlation ID of correlating the uplink and downlink SDFs/QoS flows/PCC rules/5QIs (PDBs) of the RT simultaneously; and the SMF sends the correlation ID to the RAN and the UPF.

Optionally, the RAN and the UPF correlate the uplink and downlink SDFs/QoS flows/5QIs (PDBs) based on the correlation ID, and send a correlation notification to the PCF/AF for the PCF/AF to initiate a session modification (e.g., for the AF to update the bidirectional transmission latency requirement, or for the PCF to update the uplink and/or downlink PCC rule/PDB).

Further, the RAN monitors that the latency QoS monitoring of the UL SDF/QoS flow/5QI meets the subscribe event, and needs to send a notification to the UPF. The RAN also sends the latency QoS monitoring report of the DL SDF/QoS flow/5QI identified by the correlation ID to the UPF. The RAN sends the UL and DL QoS monitoring reports (i.e., QoS latency monitoring report of the uplink transmission and QoS latency monitoring report of the downlink transmission) to the UPF/PCF, to trigger update of the uplink and/or downlink PCC rule. Optionally, the PCF authorizes a new uplink/downlink PDB, and updates the PDB corresponding to the PCC rule (which may be the new 5QIs corresponding to the selected PDB). The way in which the RAN monitors the downlink latency and sends the QoS monitoring reports is similar to the way in which the RAN monitors the uplink latency and sends the QoS monitoring reports, which will not be repeated here.

Further, the UPF monitors that the latency QoS monitoring of the UL SDF/QoS flow/5QI meets the subscribe event, and needs to send a notification to the PCF/AF. The UPF also sends the latency QoS monitoring report of the DL SDF/QoS flow/5QI identified by the correlation ID to the PCF/AF. The UPF sends the UL and DL QoS monitoring reports (i.e., QoS latency monitoring report of the uplink transmission and QoS latency monitoring report of the downlink transmission) to the PCF/AF, to trigger update of the uplink and/or downlink PCC rule. Optionally, the PCF authorizes a new uplink/downlink PDB, and updates the PDB corresponding to the PCC rule (which may be the new 5QIs corresponding to the selected PDB). The way in which the UPF monitors the downlink latency and sends the QoS monitoring reports is similar to the way in which the RAN monitors the uplink latency and sends the QoS monitoring reports, which will not be repeated here.

Further, the PCF may directly initiate update of a rule (such as a PCC rule), or the PCF may send a QoS monitoring report to the AF to trigger an AF session modification, thereby indirectly initiating update of a rule.

Optionally, the PCF carries the correlation ID in or outside the PCC rule; further, a new correlation ID/ RT indication/Peer ID/Round Trip Group ID/Peer Indication parameter may be added to the PCC rule, or the correlation ID/RT indication/Peer ID/Round Trip Group ID/Peer Indication may be implicitly carried through existing parameters (such as a service data flow template or a 5G QoS identifier).

Optionally, based on the bidirectional transmission latency requirement, the PCF may divide the bidirectional transmission into an UL PDB and a DL PDB. The UL PDB and the DL PDB may be different, but the sum of the two cannot exceed the bidirectional transmission latency. The PCF decides to generate a correlation ID to correlate the UL SDF/QoS flow/PCC rule/5QI (PDB) with the DL SDF/QoS flow/PCC rule/5QI (PDB).

Optionally, the PCF may adjust the UL PDB and the DL PDB according to the QoS monitoring report, that is, the PCF may adjust the uplink and/or downlink PCC rule (e.g., the UL PDB and/or the DL PDB, the UL 5QI and/or the DL 5QI) based on the DL and UL latency QoS monitoring reports.

Optionally, the PCF decides to generate a correlation ID based on a bidirectional transmission latency requirement indication (RT latency requirement indication), and/or XRM service subscription information, and/or an operator policy; for example, if the requirement indication, service subscription or operator policy supports a bidirectional transmission latency rule or 5QI update, a correlation ID is generated to identify the uplink and downlink SDFs/QoS flows/PCC rules/5QIs (PDBs).

Optionally, when the PCF adjusts the uplink and/or downlink PCC rule (such as the UL PDB and/or the DL PDB, the UL5QI and/or the DL 5QI) based on the QoS monitoring report, the PCF may directly trigger update of the PCC rule, or the PCF notifies the QoS monitoring report to the AF for the AF to trigger update of the PCC rule.

Optionally, the PCF directly or indirectly triggers update of the PCC rule. If the corresponding PDB may be updated, the corresponding 5QI is allocated to the updated PDB.

Optionally, the AF provides the bidirectional transmission latency requirement to the PCF, for example, the AF provides the requirement information to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a TSCTSF; or
3) sending to the PCF via a TSCTSF and an NEF.

See the following examples for details.

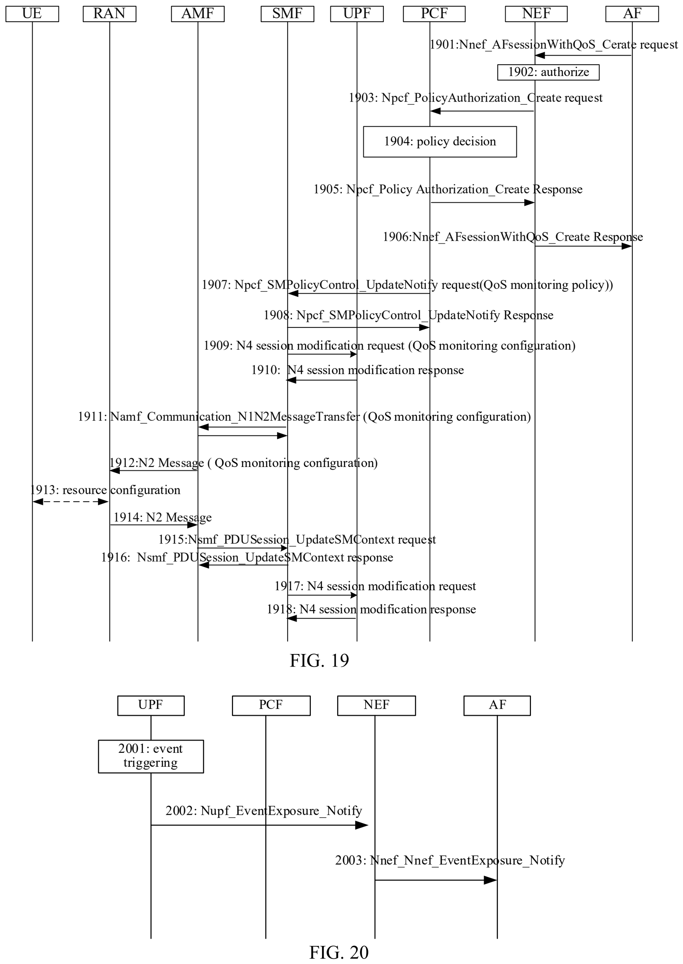

FIG. 19 shows a process for setting an AF session with a required QoS parameter, and the specific steps include the followings.

At step 1901, the AF sends an AF session resource request, for example, through the "Nnef_AFsessionWithQoS_Create request", to create an AF request. The AF carries a bidirectional transmission latency requirement (including round-trip latency or two-way delay budget) of the media data flow related to the XRM service in the request message. The round-trip latency may include an uplink latency and/or a downlink latency, or an uplink latency PDB or a downlink latency PDB.

Optionally, the AF session resource request carries XRM service information, common ID information identifying an XRM service data flow group, UE address/UE identity, AF identifier application ID, data flow description, data network name (DNN), single network slice selection assistance information (S-NSSAI), a QoS parameter and other corresponding information. Here, the common ID may be used to identify all flows in the XRM service group.

At step 1902, the NEF authorizes an AF request. If the AF is an untrusted AF, the AF request is sent to the PCF via an NEF. (Optionally, the NEF performs relevant mappings, including mapping of identifying the XRM service (AF-service-identifier) to DNN and S-NSSAI, mapping of external applications to core network application identifiers; and mapping of external UE identifiers to UE identifiers (such as SUbscription Permanent Identifier, SUPI) within the CN based on unified data management (UDM) subscription information), and mapping of external XRM service group identifiers to internal XRM service group identifiers based on UDM subscription information).

At step 1903, the NEF authorizes the AF request and decides whether to call the TSCTSF or directly contact the PCF based on parameters provided by the AF. The PCF receives attributes provided by the AF from the NEF or the TSCTSF. The NEF triggers the Npcf_PolicyAuthorization_Create request and sends the AF request to the PCF, carrying the bidirectional transmission latency requirement for the PCF to make a policy decision. The message carries the XRM service related information in the AF request.

At step 1904, the PCF makes the policy decision. The PCF may decide that updated or new policy information needs to be sent to the SMF.

RT Correlation ID: Peer ID/Round Trip Group ID/Peer Indication is added for the XRM service uplink and downlink data flows. The correlation ID is used to correlate the uplink and downlink SDFs/QoS flows/PCC rules/5QIs (PDBs) of the Round Trip. When the PCF sends the PCC rule to an SMF, it also sends the RT correlation ID simultaneously. The SMF sends the correlation ID to the RAN and the UPF. When the RAN and the UPF send a DL latency QoS monitoring notification (i.e. QoS latency monitoring report), they also send an UL latency QoS monitoring notification identified by the correlation ID to the PCF/AF. When the RAN and the UPF send the UL latency QoS monitoring notification, they also send the DL latency QoS monitoring notification identified by the correlation ID to the PCF/AF.

The PCF adds a round trip (RT) correlation ID for the uplink data flow and the downlink data flow of XRM services. The correlation ID may include one of the following: peer ID; round trip group ID; peer indication. The correlation ID is used to correlate the uplink and downlink service data flows (SDFs)/ QoS flows/ PCC rules/5QIs (such as PDB), i.e., transmission latency parameters, of the RT. When the PCF sends the PCC rules to an SMF, it also sends the correlation ID of the RT; the SMF sends the correlation ID to a RAN and a UPF; when the RAN and the UPF send downlink (DL)/uplink (UL) latency QoS monitoring notification, they also send the UL/DL latency identified by the correlation ID to the PCF/AF.

Optionally, the PCF divides the bidirectional transmission latency into an uplink PDB and a downlink PDB, generates two PCC rules corresponding to the uplink SDF and the downlink SDF, and allocates corresponding 5QIs to the two rules considering the corresponding PDBs. The two PCC rules are respectively associated with the QoS monitoring policy to monitor an uplink latency and a downlink latency.

Optionally, when the PCF sends the PCC rules to the SMF, it also sends the correlation ID of correlating the uplink and downlink SDFs/QoS flows/PCC rules/5QIs (PDBs) of the RT simultaneously; and the SMF sends the correlation ID to the RAN and the UPF.

Optionally, the RAN and the UPF correlate the uplink and downlink SDFs/QoS flows/5QIs (PDBs) based on the correlation ID, and send a correlation notification to the PCF/AF for the PCF/AF to initiate a session modification (e.g., for the AF to update the bidirectional transmission latency requirement, or for the PCF to update the uplink and/or downlink PCC rule/PDB).

Further, the RAN monitors that the latency QoS monitoring of the UL SDF/QoS flow/5QI meets the subscribe event, and needs to send a notification to the UPF. The RAN also sends the latency QoS monitoring report of the DL SDF/QoS flow/5QI identified by the correlation ID to the UPF. The RAN sends the UL and DL QoS monitoring reports to the UPF/PCF, to trigger update of the uplink and/or downlink PCC rule. Optionally, the PCF authorizes a new uplink/downlink PDB, and updates the PDB corresponding to the PCC rule (which may be the new 5QIs corresponding to the selected PDB). The way in which the RAN monitors the downlink latency and sends the QoS monitoring reports is similar to the way in which the RAN monitors the uplink latency and sends the QoS monitoring reports, which will not be repeated here.

Further, the UPF monitors that the latency QoS monitoring of the UL SDF/QoS flow/5QI meets the subscribe event, and needs to send a notification to the PCF/AF. The UPF also sends the latency QoS monitoring report of the DL SDF/QoS flow/5QI identified by the correlation ID to the PCF/AF. The UPF sends the UL and DL QoS monitoring reports to the PCF/AF, to trigger update of the uplink and/or downlink PCC rule. Optionally, the PCF authorizes a new uplink/downlink PDB, and updates the PDB corresponding to the PCC rule (which may be the new 5QIs corresponding to the selected PDB). The way in which the UPF monitors the downlink latency and sends the QoS monitoring reports is similar to the way in which the RAN monitors the uplink latency and sends the QoS monitoring reports, which will not be repeated here.

Further, the PCF may directly initiate update of a rule (such as a PCC rule), or the PCF may send a QoS monitoring report to the AF to trigger an AF session modification, thereby indirectly initiating update of a rule.

Optionally, the PCF carries the correlation ID in or outside the PCC rule; further, a new correlation ID/RT indication/Peer ID/Round Trip Group ID/Peer Indication parameter may be added to the PCC rule, or the correlation ID/RT indication/Peer ID/Round Trip Group ID/Peer Indication may be implicitly carried through existing parameters (such as a service data flow template or a 5G QoS identifier).

Optionally, based on the bidirectional transmission latency requirement, the PCF may divide the bidirectional transmission into an UL PDB and a DL PDB. The UL PDB and the DL PDB may be different, but the sum of the two cannot exceed the bidirectional transmission latency. The PCF decides to generate a correlation ID to correlate the UL SDF/QoS flow/PCC rule/5QI (PDB) with the DL SDF/QoS flow/PCC rule/5QI (PDB).

Optionally, the PCF may adjust the UL PDB and the DL PDB according to the QoS monitoring report, that is, the PCF may adjust the uplink and/or downlink PCC rule (e.g., the UL PDB and/or the DL PDB, the UL 5QI and/or the DL 5QI) based on the DL and UL latency QoS monitoring reports.

Optionally, the PCF decides to generate a correlation ID based on a RT latency requirement indication, and/or XRM service subscription information, and/or an operator policy; for example, if the requirement indication, service subscription or operator policy supports a bidirectional transmission latency rule or 5QI update, a correlation ID is generated to identify the uplink and downlink SDFs/QoS flows/PCC rules/5QIs (PDBs).

Optionally, when the PCF adjusts the uplink and/or downlink PCC rule (such as the UL PDB and/or the DL PDB, the UL5QI and/or the DL 5QI) based on the QoS monitoring report, the PCF may directly trigger update of the PCC rule, or the PCF notifies the QoS monitoring report to the AF for the AF to trigger update of the PCC rule.

Optionally, the PCF directly or indirectly triggers update of the PCC rule. If the corresponding PDB may be updated, the corresponding 5QI is allocated to the updated PDB.

Optionally, the AF provides the bidirectional transmission latency requirement to the PCF, for example, the AF provides the requirement information to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a TSCTSF; or
3) sending to the PCF via a TSCTSF and an NEF.

At step 1905, the PCF sends the "Npcf_Policy Authorization_Create Response" to the NEF.

At step 1906, the NEF sends the "Nnef_AFsessionWithQoS_Create response" message to the AF, carrying a feedback result, informing whether the request is authorized.

At step 1907, the PCF sends the "Npcf_SMPolicyControl_UpdateNotify request" to the SMF to initiate an SM policy related modification request (PCC rule (QoS monitoring policy)).

Based on the measured QoS monitoring policy from the PCF, the SMF generates a QoS monitoring configuration for the UPF (and the RAN if necessary), as described in step 1907.

When the PCF sends the PCC rules to the SMF, it also sends the RT correlation ID; and the SMF sends the correlation ID to the RAN and the UPF.

Optionally, the PCF carries the correlation ID inside or outside the PCC rule; further, a correlation ID/RT indication/Peer ID/Round Trip Group ID/Peer Indication parameter may be added to the PCC rule, or the correlation ID/RT indication/Peer ID/Round Trip Group ID/Peer Indication may be implicitly carried through existing parameters (service data flow template, or 5G QoS identifier).

At step 1908, the SMF replies to the PCF with an SM policy related modification response (Npcf_SMPolicyControl_UpdateNotify response).

At step 1909, the SMF initiates an N4 session modification request (QoS monitoring configuration) to the UPF.

Based on the correlation ID, the UPF correlates the uplink and downlink SDFs/QoS flows/5QIs (PDBs), and sends a correlation notification to the PCF/AF for the PCF/AF to initiate a session modification (e.g., for the AF to update the bidirectional transmission latency requirement, or for the PCF to update the uplink and/or downlink PCC rule/PDB).

When UPF monitors that the latency QoS monitoring of the UL SDF/QoS flow/5QI meets the subscribe event, it needs to send a notification to the PCF/AF. The UPF also sends the latency QoS monitoring report of the DL SDF/QoS flow/5QI identified by the correlation ID to the PCF/AF. The UPF sends the UL and DL QoS monitoring reports to the PCF/AF, to trigger update of the uplink and/or downlink PCC rule. Optionally, the PCF authorizes a new uplink/downlink PDB and updates the PDB corresponding to the PCC rule (which may be the new 5QIs corresponding to the selected PDB).

At step 1910, after receiving the QoS monitoring configuration, the UPF enables measurement and reporting. The UPF responds to the SMF.

At step 1911, for the modification required by the SMF, the SMF calls Namf_Communication_ N1N2MessageTransfer ([N2SM information](PDU session ID, QFI(s), QoS Profile(s), QoS monitoring configuration), N1SM container).

At step 1912, the AMF may send N2 ([N2SM information received from the SMF], NAS message (PDU session ID, N1SM container (PDU session modification command)) message to the (R)AN. After receiving the QoS monitoring configuration, the RAN enables event measurement and reporting (for example, the RAN detects the UL latency and the DL latency, and the sum of UL PDB and the DL PDB is used as the bidirectional latency).

Based on the correlation ID, the RAN correlates the uplink and downlink SDFs/QoS flows/5QIs (PDBs), and sends a correlation notification to the PCF/AF for the PCF/AF to initiate a session modification (e.g., for the AF to update the bidirectional transmission latency requirement, or for the PCF to update the uplink and/or downlink PCC rule/PDB).

Further, the RAN monitors that the latency QoS monitoring of the UL SDF/QoS flow/5QI meets the subscribe event, and needs to send a notification to the UPF. The RAN also sends the latency QoS monitoring report of the DL SDF/QoS flow/5QI identified by the correlation ID to the UPF. The RAN sends the UL and DL QoS monitoring reports to the UPF/PCF, to trigger update of the uplink and/or downlink PCC rule. Optionally, the PCF authorizes a new uplink/downlink PDB, and updates the PDB corresponding to the PCC rule (which may be the new 5QIs corresponding to the selected PDB).

At step 1913, the RAN may configure transmission resources.

At step 1914, the RAN may confirm an N2 PDU Session Request by sending an N2 PDU Session Ack message to the AMF.

At step 1915, the AMF forwards the N2 SM information received from the AN to the SMF through the "Nsmf_PDUSession_UpdateSMContext Request" service operation.

At step 1916, the SMF responds with the "Nsmf_PDUSession_UpdateSMContext Response".

At steps 1917-1918, the SMF may update the N4 session of the UPF involved in the PDU session update by sending an "N4 Session Modification Request" message to the UPF. When the PCF receives the QoS monitoring report later, the PCF will perform the following processing.

When the PCF adjusts the uplink and/or downlink PCC rule (such as the UL PDB and/or the DL PDB, the UL5QI and/or the DL 5QI) based on the QoS monitoring report, the PCF may directly trigger update of the PCC rule, or the PCF notifies the QoS monitoring report to the AF for the AF to trigger update of the PCC rule.

Optionally, the PCF directly or indirectly triggers update of the PCC rule. If the corresponding PDB may be updated, the corresponding 5QI is allocated to the updated PDB.

Optionally, the AF provides the bidirectional transmission latency requirement to the PCF, for example, the AF provides the requirement information to the PCF in at least one of the following procedures:
1) the AF providing the bidirectional transmission latency requirement and a required QoS parameter to the PCF during an AF session;
2) an AF session procedure with a requirement QoS update procedure;
3) a service parameter configuration procedure; or
4) a procedure for configuring policies for subsequent AF sessions.

When the AF provides the bidirectional transmission latency requirement to the PCF, the AF may directly or indirectly send it to the AF. The indirectly sending includes:
1) sending to the PCF via an NEF;
2) sending to the PCF via a TSCTSF; or
3) sending to the PCF via a TSCTSF and an NEF.

The process of transmitting the QoS monitoring report to the AF may adopt the user plane notification procedure from the UPF to the AF, or a control plane procedure from the UPF to the SMF to the PCF, as shown in FIG. 20.

The sequence of steps listed in the above embodiment is not used to limit the execution sequence of each step. Each step may be executed in the sequence listed in each step, or may be executed in other sequences without contradiction. Each step may be implemented as a separate embodiment if there is no contradiction, or multiple steps may be combined together as an embodiment.

FIG. 20 shows a process of notifying information, and the specific steps include the followings.

At step 1401, when an event is detected/reached, reporting will be triggered (such as a threshold is reached, or a periodic timer expires), the UPF triggers the "Nupf_EventExposure_Notify" message to report the measured information.

At step 2002, the UPF sends the Nupf_EventExposure_Notify message (measured bidirectional latency budget status information) to the NEF. The UPF reports the QoS latency monitoring report to the AF (via the NEF) to trigger corresponding session update, or the UPF sends the QoS latency monitoring report to the PCF (via the SMF) for the PCF to trigger rule update. The PCF reports to the AF to trigger update or the PCF triggers update locally. For details, reference may be made to the corresponding rule update description in Figure X.

At step 2003, the NEF sends the "Nnef_Nnef_EventExposure_Notify" (measured bidirectional latency budget status information) to the AF.

The sequence of steps listed in the above embodiment is not used to limit the execution sequence of each step. Each step may be executed in the sequence listed in each step, or may be executed in other sequences without contradiction. Each step may be implemented as a separate embodiment if there is no contradiction, or multiple steps may be combined together as an embodiment.

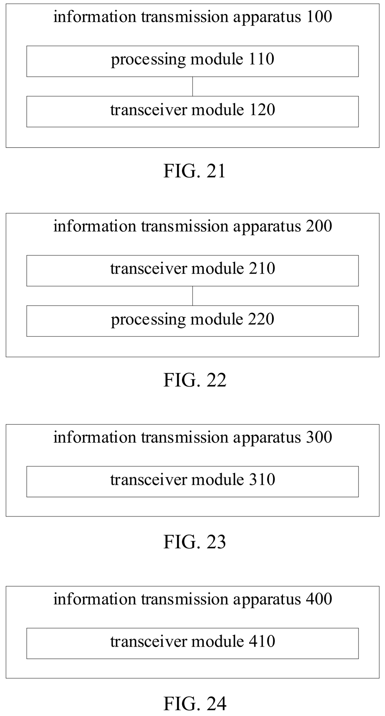

As shown in FIG. 21, an embodiment provides an information transmission apparatus 100, which is applied to a PCF and includes a processing module 110.

The processing module 110 is configured to determine and send a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is sent by the PCF to a session management function (SMF), and is sent by the SMF to at least one of:
an access network device; or
a user plane function (UPF).

In an embodiment, the correlation ID is indicated by a policy and charging control (PCC) rule associated with the predetermined service.

In an embodiment, the apparatus further includes:
a transceiver module 120, configured to receive a quality of service (QoS) latency monitoring report of the uplink transmission and a QoS latency monitoring report of the downlink transmission after sending the correlation ID of the predetermined service, in which the QoS latency monitoring report of the uplink transmission and the QoS latency monitoring report of the downlink transmission are correlated using the correlation ID;
in which the processor module is further configured to update a PCC rule of the uplink transmission of the predetermined service and/or a PCC rule of the downlink transmission of the predetermined service based on the QoS latency monitoring report of the uplink transmission and the QoS latency monitoring report of the downlink transmission.

In an embodiment, the transceiver module is further configured to send the QoS latency monitoring report of the uplink transmission and the QoS latency monitoring report of the downlink transmission to an application function (AF) associated with the predetermined service;
the transceiver module is further configured to receive AF session update information sent by the AF in response to the QoS latency monitoring report of the uplink transmission and the QoS latency monitoring report of the downlink transmission; and
the processor module is further configured to update the PCC rule of the uplink transmission of the predetermined service and/or the PCC rule of the downlink transmission of the predetermined service based on the AF session update information.

In an embodiment, the transceiver module is further configured to perform at least one of:
receiving the QoS latency monitoring report of the uplink transmission and the QoS latency monitoring report of the downlink transmission sent by a user plane function (UPF); or
receiving the QoS latency monitoring report of the uplink transmission and the QoS latency monitoring report of the downlink transmission sent by an access network device via a UPF.

In an embodiment, the apparatus further includes:
a transceiver module, configured to receive AF session update information sent by an AF associated with the predetermined service in response to the QoS latency monitoring report of the uplink transmission and the QoS latency monitoring report of the downlink transmission, in which the QoS latency monitoring report of the uplink transmission and the QoS latency monitoring report of the downlink transmission are sent by a UPF to the AF;
in which the processor is further configured to update the PCC rule of the uplink transmission of the predetermined service and/or the PCC rule of the downlink transmission of the predetermined service based on the AF session update information.

In an embodiment, the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets an uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a downlink subscribe event triggering condition, and determining the QoS latency monitoring report of the uplink transmission through the correlation ID.

In an embodiment, updating the PCC rule of the uplink transmission of the predetermined service includes: updating a data packet delay budget (PDB) parameter and/or a data packet set delay budget (PSDB) parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

In an embodiment, determining the correlation ID of the predetermined service includes:
determining the correlation ID based at least on at least one of:
a transmission latency parameter of a bidirectional transmission of the data flow of the predetermined service;
subscription information associated with the predetermined service; or
an operator policy associated with the predetermined service.

In an embodiment, the processor is further configured to:
determine the transmission latency parameter of the uplink transmission of the data flow and/or the transmission latency parameter of the downlink transmission of the data flow based on a transmission latency parameter of a bidirectional transmission of the data flow of the predetermined service.

In an embodiment, the predetermined service further includes at least one of:
an extended reality multimedia (XRM) service; or
a multimodal service.

As shown in FIG. 22, an embodiment provides an information transmission apparatus 200, which is applied to an AF and includes a transceiver module 210.

The transceiver module 210 is configured to send a transmission latency parameter of a bidirectional transmission of a predetermined service to a policy control function (PCF), in which the transmission latency parameter of the bidirectional transmission is used for the PCF to determine a correlation identifier (ID) of the predetermined service, and the correlation ID is used to correlate a transmission latency parameter of an uplink transmission with a transmission latency parameter of a downlink transmission of a data flow of the predetermined service.

In an embodiment, the correlation ID is sent by the PCF via an SMF to at least one of: an access network device or a UPF.

In an embodiment, the correlation ID is carried in a PCC rule associated with the predetermined service sent by the PCF to the SMF.

In an embodiment, the transceiver module is further configured to receive a QoS latency monitoring report of the uplink transmission and a QoS latency monitoring report of the downlink transmission sent by a UPF or the PCF.

In an embodiment, the apparatus further includes a processing module 220, configured to:
determine whether to send AF session update information to the PCF based at least on the QoS latency monitoring report of the uplink transmission and the QoS latency monitoring report of the downlink transmission.

In an embodiment, the AF session update information is used for the PCF to update a PCC rule of the uplink transmission of the predetermined service and/or a PCC rule of the downlink transmission of the predetermined service.

In an embodiment, the AF session update information is used for instructing to update a PDB parameter and/or a PSDB parameter in the PCC rule of the uplink transmission of the predetermined service and/or a PDB parameter and/or a PSDB parameter in the PCC rule of the downlink transmission of the predetermined service.

In an embodiment, the transceiver module is further configured to receive the QoS latency monitoring report of the uplink transmission and the QoS latency monitoring report of the downlink transmission sent by the UPF via an NEF;
and/or
the transceiver module is further configured to receive the QoS latency monitoring report of the uplink transmission and the QoS latency monitoring report of the downlink transmission sent by the PCF via an NEF.

In an embodiment, the transmission latency parameter of the bidirectional transmission is used for the PCF to determine the transmission latency parameter of the uplink transmission and the transmission latency parameter of the downlink transmission of the data flow of the predetermined service.

In an embodiment, the transceiver module is further configured to perform at least one of:
sending the transmission latency parameter of the bidirectional transmission of the predetermined service to the PCF via an NEF;
sending the transmission latency parameter of the bidirectional transmission of the predetermined service to the PCF via a time sensitive communication and time synchronization function (TSCTSF); or
sending the transmission latency parameter of the bidirectional transmission of the predetermined service to the PCF via an NEF and the TSCTSF.

As shown in FIG. 23, an embodiment provides an information transmission apparatus 300, which is applied to a UPF and includes a transceiver module 310.

The transceiver module 310 is configured to receive a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is indicated by a PCC rule associated with the predetermined service sent by a PCF to an SMF.

In an embodiment, the transceiver module is further configured to perform at least one of:
sending a QoS latency monitoring report of the uplink transmission and a QoS latency monitoring report of the downlink transmission to a PCF; or
sending the QoS latency monitoring report of the uplink transmission and the QoS latency monitoring report of the downlink transmission to an AF associated with the predetermined service;
in which the QoS latency monitoring report of the uplink transmission and the QoS latency monitoring report of the downlink transmission are correlated using the correlation ID.

In an embodiment, the QoS latency monitoring report of the uplink transmission and the QoS latency monitoring report of the downlink transmission are sent by the UPF and/or an access network device in case of monitoring the transmission latency parameter of the uplink transmission, determining that the transmission latency parameter of the uplink transmission meets a first uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the UPF and/or the access network device in case of monitoring the transmission latency parameter of the downlink transmission, determining that the transmission latency parameter of the downlink transmission meets a first downlink subscribe event triggering condition, and determining the QoS latency monitoring report of the uplink transmission through the correlation ID.

As shown in FIG. 24, an embodiment provides an information transmission apparatus 400, which is applied to an access network device and includes a transceiver module 410.

The transceiver module 410 is configured to receive a correlation identifier (ID) of a predetermined service, in which the correlation ID is used to correlate a transmission latency parameter of an uplink transmission with a transmission latency parameter of a downlink transmission of a data flow of the predetermined service.

In an embodiment, the correlation ID is indicated by a PCC rule associated with the predetermined service sent by a PCF to an SMF.

In an embodiment, the transceiver module is further configured to:
send a QoS latency monitoring report of the uplink transmission and a QoS latency monitoring report of the downlink transmission to a PCF via a UPF; in which the QoS latency monitoring report of the uplink transmission and the QoS latency monitoring report of the downlink transmission are correlated using the correlation ID.

In an embodiment, the QoS latency monitoring report of the uplink transmission and the QoS latency monitoring report of the downlink transmission are used for the PCF to update a PCC rule of the uplink transmission of the predetermined service and/or a PCC rule of the downlink transmission of the predetermined service.

In an embodiment, the QoS latency monitoring report of the uplink transmission and the QoS latency monitoring report of the downlink transmission are sent by the access network device in case of monitoring the transmission latency parameter of the uplink transmission, determining that the transmission latency parameter of the uplink transmission meets a second uplink subscribe event triggering condition, and determining the QoS latency monitoring report of the downlink transmission through the correlation ID;
and/or
the QoS latency monitoring report of the uplink transmission and the QoS latency monitoring report of the downlink transmission are sent by the access network device in case of monitoring the transmission latency parameter of the downlink transmission, determining that the transmission latency parameter of the downlink transmission meets a second downlink subscribe event triggering condition, and determining the QoS latency monitoring report of the uplink transmission through the correlation ID.

In an embodiment, updating the PCC rule of the uplink transmission of the predetermined service includes: updating a PDB parameter and/or a PSDB parameter in the PCC rule of the uplink transmission of the predetermined service;
updating the PCC rule of the downlink transmission of the predetermined service includes: updating a PDB parameter and/or a PSDB parameter in the PCC rule of the downlink transmission of the predetermined service.

An embodiment of the present disclosure provides a communication device including:
a processor, and
a memory for storing instructions executable by the processor.

The processor is configured to perform the method of any of the embodiments of the present disclosure when executing the instructions.

In an embodiment, the communication device may include but is not limited to at least one of: a UE or a network device. Here, the network device may include a core network or access network device, etc. Here, the access network device may include a base station; the core network may include an AMF and an SMF.

The processor may include various types of storage media, which may be non-temporary computer storage media that can continue to memorize information stored thereon after the user device loses power.

The processor may be connected to the memory through a bus or the like, and may be used to read an executable program stored in the memory, for example, at least one of the methods shown in FIGS. 2 to 20.

The present disclosure also provides a computer storage medium storing a computer executable program. When the executable program is executed by a processor, the information transmission method of any embodiment of the present disclosure, for example, at least one of the methods shown in FIGS. 2 to 20 may be implemented.

Regarding the apparatus or the storage medium in the above embodiments, the specific manner in which each module performs the operation has been described in detail in the method embodiments, which will not be elaborated here.

An embodiment of the present disclosure also provides a core network device for executing the information transmission method of any embodiment of the present disclosure, for example, at least one of the methods shown in FIGS. 2 to 20.

For example:
The core network device receives a transmission latency parameter of a bidirectional transmission of a predetermined service sent by the AF.

The core network device determines a correlation ID of the predetermined service according to the transmission latency parameter of the bidirectional transmission of the predetermined service, in which the correlation ID is used to correlate a transmission latency parameter of an uplink transmission with a transmission latency parameter of a downlink transmission of a data flow of the predetermined service.

The core network device sends the correlation ID to the access network device.

Regarding the core network device in the above embodiment, the specific manner in which each network element performs the operation has been described in detail in the method embodiments, which will not be elaborated here.

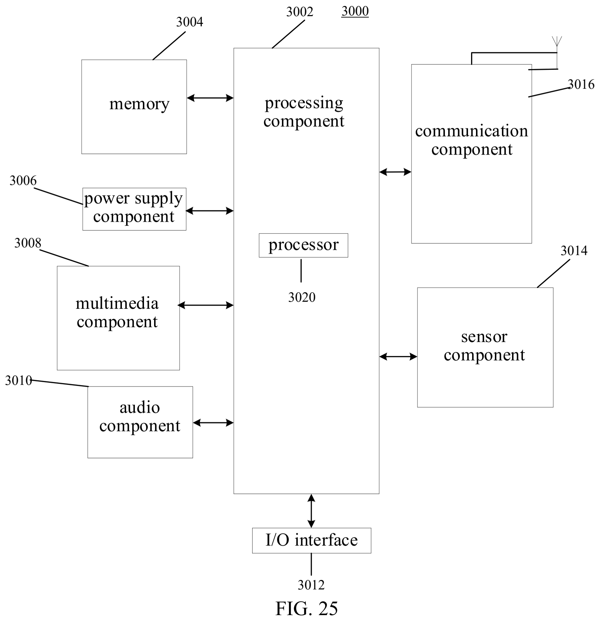

FIG. 25 is a schematic block diagram of a UE 3000 according to an embodiment of the present disclosure. For example, the UE 3000 may be a mobile phone, a computer, a digital broadcasting terminal, a message transceiver device, a gaming console, a tablet device, a medical device, a fitness device, a personal digital assistant, etc.

Referring to FIG. 25, the UE 3000 may include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the overall operations of the UE 3000, such as operations associated with displays, telephone calls, data communications, camera operations, and recording operations. The processing component 3002 may include one or more processors 3020 to execute instructions to accomplish all or some of the steps of the method described above. Alternatively, the processing component 3002 may include one or more modules to facilitate interactions between the processing component 3002 and other components. For example, the processing component 3002 may include a multimedia module to facilitate interactions between the multimedia component 3008 and the processing component 3002.

The memory 3004 is configured to store various types of data to support operation at the UE 3000. Examples of such data include instructions for any application or method operated on the UE 3000, contact data, phone book data, messages, pictures, videos, etc. The memory 3004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 3006 provides power to the various components of the UE 3000. The power supply component 3006 may include a power management system, one or more power supplies, and other components associated with generating, managing, and distributing power for the UE 3000.

The multimedia component 3008 includes a screen providing an output interface between the UE 3000 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 3008 includes a front camera and/or a rear camera. When the UE 3000 is in an operating mode, such as a shooting mode or a video mode, the front camera and/or the rear camera may receive external multimedia data. Each front camera and rear camera may be a fixed optical lens system or have a focal length and optical zoom capability.

The audio component 3010 is configured to output and/or input audio signals. For example, the audio component 3010 includes a microphone (MIC) that is configured to receive external audio signals when the UE 3000 is in an operating mode, such as a call mode, a recording mode, and a voice recognition mode. The received audio signals may be further stored in the memory 3004 or sent in the communication component 3016. In some embodiments, the audio component 3010 further includes a speaker for outputting audio signals.

The I/ O interface 812 provides an interface between the processing component 3002 and a peripheral interface module, said peripheral interface module may be a keypad, a click wheel, buttons, etc. These buttons may include, but are not limited to: a home button, a volume button, a start button, and a lock button.

The sensor component 3014 includes one or more sensors for providing various aspects of status assessment for the UE 3000. For example, the sensor component 3014 can detect the open/closed state of the UE 3000, the relative positioning of components, such as the display and keypad of the UE 3000, and the sensor component 3014 can also detect the position change of the UE 3000 or a component of the UE 3000, the presence or absence of contact between the user and the UE 3000, the orientation or acceleration/deceleration of the UE 3000, and the temperature change of the UE 3000. The sensor component 3014 may include a proximity sensor configured to detect the presence of nearby objects without any physical contact. The sensor component 3014 may also include an optical sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate communication between the UE 3000 and other devices by wired or wireless means. The UE 3000 may access a wireless network based on a communication standard, such as Wi-Fi, 4G or 5G, or their combination. In an exemplary embodiment, the communication component 3016 receives broadcast signals or broadcast-related information from an external broadcast management system in a broadcast channel. In an exemplary embodiment, the communication component 3016 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 3000 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 3004 including instructions, the instructions being executable by a processor 3020 of the UE 3000 for accomplishing the above-described method. For example, the non-transitory computer-readable storage medium may be a ROM, a random access memory (RAM), a CD-ROM, a magnetic tape, floppy disks, and optical data storage devices, etc.

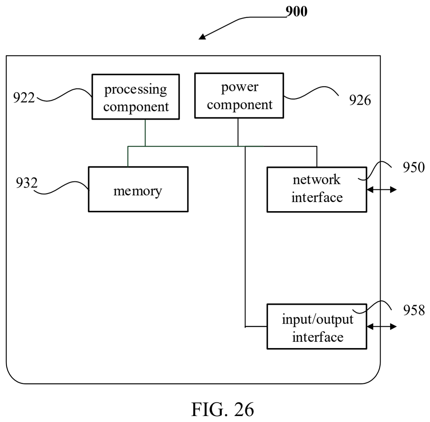

As shown in FIG. 26, an embodiment of the present disclosure shows a structure of a base station. For example, the base station 900 may be provided as a network-side device. Referring to FIG. 26, the base station 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned method applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS X TM, Unix TM, Linux TM, FreeBSD TM or the like.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. An information transmission method, performed by a policy control function (PCF), comprising:
determining and sending a correlation identifier (ID) of a predetermined service, wherein the correlation ID is used to correlate a transmission latency parameter of an uplink transmission of a data flow of the predetermined service with a transmission latency parameter of a downlink transmission of the data flow of the predetermined service.

2. The method of claim 1, wherein after sending the correlation ID of the predetermined service, the method further comprises:
receiving a quality of service (QoS) latency monitoring report of the uplink transmission and a QoS latency monitoring report of the downlink transmission, wherein the QoS latency monitoring report of the uplink transmission and the QoS latency monitoring report of the downlink transmission are correlated using the correlation ID; and
updating a policy and charging control (PCC) rule of the uplink transmission of the predetermined service and/or a PCC rule of the downlink transmission of the predetermined service based on the QoS latency monitoring report of the uplink transmission and the QoS latency monitoring report of the downlink transmission.

3. The method of claim 2, wherein updating the PCC rule of the uplink transmission of the predetermined service and/or the PCC rule of the downlink transmission of the predetermined service based on the QoS latency monitoring report of the uplink transmission and the QoS latency monitoring report of the downlink transmission comprises:
sending the QoS latency monitoring report of the uplink transmission and the QoS latency monitoring report of the downlink transmission to an application function (AF) associated with the predetermined service;
receiving AF session update information sent by the AF in response to the QoS latency monitoring report of the uplink transmission and the QoS latency monitoring report of the downlink transmission; and
updating the PCC rule of the uplink transmission of the predetermined service and/or the PCC rule of the downlink transmission of the predetermined service based on the AF session update information.

4. The method of claim 2, wherein receiving the QoS latency monitoring report of the uplink transmission and the QoS latency monitoring report of the downlink transmission comprises at least one of:
receiving the QoS latency monitoring report of the uplink transmission and the QoS latency monitoring report of the downlink transmission sent by a user plane function (UPF); or
receiving the QoS latency monitoring report of the uplink transmission and the QoS latency monitoring report of the downlink transmission sent by an access network device via a UPF.

5. The method of any of claims 1-4, further comprising:
receiving AF session update information sent by an AF associated with the predetermined service in response to the QoS latency monitoring report of the uplink transmission and the QoS latency monitoring report of the downlink transmission, wherein the QoS latency monitoring report of the uplink transmission and the QoS latency monitoring report of the downlink transmission are sent by a UPF to the AF;
updating a PCC rule of the uplink transmission of the predetermined service and/or a PCC rule of the downlink transmission of the predetermined service based on the AF session update information.

6. The method of any of claims 2-5, wherein
the QoS latency monitoring report of the uplink transmission and the QoS latency monitoring report of the downlink transmission are sent by a UPF and/or an access network device in case of monitoring the transmission latency parameter of the uplink transmission, determining that the transmission latency parameter of the uplink transmission meets an uplink subscribe event triggering condition, and determining the QoS latency monitoring report of the downlink transmission correlated with the correlation ID;
and/or
the QoS latency monitoring report of the uplink transmission and the QoS latency monitoring report of the downlink transmission are sent by a UPF and/or an access network device in case of monitoring the transmission latency parameter of the downlink transmission, determining that the transmission latency parameter of the downlink transmission meets a downlink subscribe event triggering condition, and determining the QoS latency monitoring report of the uplink transmission correlated with the correlation ID.

7. The method of any of claims 2-5, wherein
updating the PCC rule of the uplink transmission of the predetermined service comprises: updating a data packet delay budget (PDB) parameter and/or a data packet set delay budget (PSDB) parameter in the PCC rule of the uplink transmission of the predetermined service;
updating the PCC rule of the downlink transmission of the predetermined service comprises: updating a PDB parameter and/or a PSDB parameter in the PCC rule of the downlink transmission of the predetermined service.

8. The method of any of claims 1-7, wherein the correlation ID is sent by the PCF to a session management function (SMF), and is sent by the SMF to at least one of:
an access network device; or
a UPF.

9. The method of any of claims 1-8, wherein
the correlation ID is indicated by a PCC rule associated with the predetermined service.

10. The method of any of claims 1-9, wherein determining the correlation ID of the predetermined service comprises:
determining the correlation ID based at least on at least one of:
a transmission latency parameter of a bidirectional transmission of the data flow of the predetermined service;
subscription information associated with the predetermined service; or
an operator policy associated with the predetermined service.

11. The method of any of claims 1-10, further comprising:
determining the transmission latency parameter of the uplink transmission of the data flow and/or the transmission latency parameter of the downlink transmission of the data flow based on a transmission latency parameter of a bidirectional transmission of the data flow of the predetermined service.

12. The method of any of claims 1-11, wherein the predetermined service comprises at least one of:
an extended reality multimedia (XRM) service; or
a multimodal service.

13. An information transmission method, performed by an application function (AF), comprising:
sending a transmission latency parameter of a bidirectional transmission of a predetermined service to a policy control function (PCF), wherein the transmission latency parameter of the bidirectional transmission is used for the PCF to determine a correlation identifier (ID) of the predetermined service, and the correlation ID is used to correlate a transmission latency parameter of an uplink transmission of a data flow of the predetermined service with a transmission latency parameter of a downlink transmission of the data flow of the predetermined service.

14. The method of claim 13, further comprising:
receiving a quality of service (QoS) latency monitoring report of the uplink transmission and a QoS latency monitoring report of the downlink transmission sent by a user plane function (UPF) or the PCF.

15. The method of claim 14, further comprising:
determining whether to send application function (AF) session update information to the PCF based at least on the QoS latency monitoring report of the uplink transmission and the QoS latency monitoring report of the downlink transmission.

16. The method of claim 14, wherein
receiving the QoS latency monitoring report of the uplink transmission and the QoS latency monitoring report of the downlink transmission sent by the UPF comprises: receiving the QoS latency monitoring report of the uplink transmission and the QoS latency monitoring report of the downlink transmission sent by the UPF via a network exposure function (NEF);
receiving the QoS latency monitoring report of the uplink transmission and the QoS latency monitoring report of the downlink transmission sent by the PCF comprises: receiving the QoS latency monitoring report of the uplink transmission and the QoS latency monitoring report of the downlink transmission sent by the PCF via the NEF.

17. The method of any of claims 13-16, wherein the correlation ID is sent by the PCF via a session management function (SMF) to at least one of: an access network device or a UPF.

18. The method of claim 17, wherein
the correlation ID is carried in a policy and charging control (PCC) rule associated with the predetermined service sent by the PCF to the SMF.

19. The method of any of claims 13-18, wherein sending the transmission latency parameter of the bidirectional transmission of the predetermined service to the PCF comprises at least one of:
sending the transmission latency parameter of the bidirectional transmission of the predetermined service to the PCF by an NEF;
sending the transmission latency parameter of the bidirectional transmission of the predetermined service to the PCF by a time sensitive communication and time synchronization function (TSCTSF); or
sending the transmission latency parameter of the bidirectional transmission of the predetermined service to the PCF by an NEF via a TSCTSF.

20. An information transmission method, performed by a user plane function (UPF), comprising:
receiving a correlation identifier (ID) of a predetermined service, wherein the correlation ID is used to correlate a transmission latency parameter of an uplink transmission of a data flow of the predetermined service with a transmission latency parameter of a downlink transmission of the data flow of the predetermined service.

21. The method of claim 20, further comprising at least one of:
sending a quality of service (QoS) latency monitoring report of the uplink transmission and a QoS latency monitoring report of the downlink transmission to a policy control function (PCF); or
sending the QoS latency monitoring report of the uplink transmission and the QoS latency monitoring report of the downlink transmission to an application function (AF) associated with the predetermined service;
wherein the QoS latency monitoring report of the uplink transmission and the QoS latency monitoring report of the downlink transmission are correlated using the correlation ID.

22. The method of claim 21, wherein
the QoS latency monitoring report of the uplink transmission and the QoS latency monitoring report of the downlink transmission are sent by the UPF and/or an access network device in case of monitoring the transmission latency parameter of the uplink transmission, determining that the transmission latency parameter of the uplink transmission meets a first uplink subscribe event triggering condition, and determining the QoS latency monitoring report of the downlink transmission correlated with the correlation ID;
and/or
the QoS latency monitoring report of the uplink transmission and the QoS latency monitoring report of the downlink transmission are sent by the UPF and/or an access network device in case of monitoring the transmission latency parameter of the downlink transmission, determining that the transmission latency parameter of the downlink transmission meets a first downlink subscribe event triggering condition, and determining the QoS latency monitoring report of the uplink transmission correlated with the correlation ID.

23. The method of any of claims 20-21, wherein
the correlation ID is indicated by a policy and charging control (PCC) rule associated with the predetermined service sent by a policy control function (PCF) to a session management function (SMF).

24. An information transmission method, performed by an access network device, comprising:
receiving a correlation identifier (ID) of a predetermined service, wherein the correlation ID is used to correlate a transmission latency parameter of an uplink transmission of a data flow of the predetermined service with a transmission latency parameter of a downlink transmission of the data flow of the predetermined service.

25. The method of claim 24, further comprising:
Sending a quality of service (QoS) latency monitoring report of the uplink transmission and a QoS latency monitoring report of the downlink transmission to a policy control function (PCF) via a user plane function (UPF), wherein the QoS latency monitoring report of the uplink transmission and the QoS latency monitoring report of the downlink transmission are correlated using the correlation ID.

26. The method of claim 25, wherein
the QoS latency monitoring report of the uplink transmission and the QoS latency monitoring report of the downlink transmission are sent by the access network device in case of monitoring the transmission latency parameter of the uplink transmission, determining that the transmission latency parameter of the uplink transmission meets a second uplink subscribe event triggering condition, and determining the QoS latency monitoring report of the downlink transmission correlated with the correlation ID;
and/or
the QoS latency monitoring report of the uplink transmission and the QoS latency monitoring report of the downlink transmission are sent by the access network device in case of monitoring the transmission latency parameter of the downlink transmission, determining that the transmission latency parameter of the downlink transmission meets a second downlink subscribe event triggering condition, and determining the QoS latency monitoring report of the uplink transmission correlated with the correlation ID.

27. The method of any of claims 24-26, wherein
the correlation ID is indicated by a policy and charging control (PCC) rule associated with the predetermined service sent by a policy control function (PCF) to a session management function (SMF).

28. An information transmission apparatus, applied to a policy control function (PCF), comprising:
a processing module, configured to determine and send a correlation identifier (ID) of a predetermined service, wherein the correlation ID is used to correlate a transmission latency parameter of an uplink transmission of a data flow of the predetermined service with a transmission latency parameter of a downlink transmission of the data flow of the predetermined service.

29. An information transmission apparatus, applied to an application function (AF), comprising:
a transceiver module, configured to send a transmission latency parameter of a bidirectional transmission of a predetermined service to a policy control function (PCF), wherein the transmission latency parameter of the bidirectional transmission is used for the PCF to determine a correlation identifier (ID) of the predetermined service, and the correlation ID is used to correlate a transmission latency parameter of an uplink transmission of a data flow of the predetermined service with a transmission latency parameter of a downlink transmission of the data flow of the predetermined service.

30. An information transmission apparatus, applied to a user plane function (UPF), comprising:
a transceiver module, configured to receive a correlation identifier (ID) of a predetermined service, wherein the correlation ID is used to correlate a transmission latency parameter of an uplink transmission of a data flow of the predetermined service with a transmission latency parameter of a downlink transmission of the data flow of the predetermined service.

31. An information transmission apparatus, applied to an access network device, comprising:
a transceiver module, configured to receive a correlation identifier (ID) of a predetermined service, wherein the correlation ID is used to correlate a transmission latency parameter of an uplink transmission of a data flow of the predetermined service with a transmission latency parameter of a downlink transmission of the data flow of the predetermined service.

32. A communication device, comprising a processor and a memory for storing instructions executable by the processor, wherein the processor is configured to perform the method of any one of claims 1 to 12, 13-19, 20-23, or 24-27 when executing the instructions.

33. A computer storage medium for storing computer-executable programs, wherein when the computer-executable programs are executed by a processor, the method of any one of claims 1 to 12, 13-19, 20-23, or 24-27 is implemented.

34. A core network device, comprising a policy control function (PCF) and a user plane function (UPF), wherein the PCF is configured to perform the method of any of claims 1-12, and the UPF is configured to perform the method of any of claims 20-23.
